# FASCICULE DE BREVET EUROPEEN

(11) **EP 1 608 897 B1**
(45) Date de publication et mention de la délivrance du brevet: **19.07.2006**
(21) Numéro de dépôt: 04724038.7
(22) Date de dépôt: 29.03.2004
(51) Int. Cl.: F16H 61/32

(54) **DISPOSITIF DE COMMANDE DE BOITE DE VITESSES ROBOTISEE ET PROCEDE DE DETERMINATION AUTOMATIQUE DE PARTICULARITES GEOMETRIQUES DE LA GRILLE DE COMMANDE DE CE DISPOSITIF.**
SCHALTEINRICHTUNG FÜR AUTOMATISIERTES SCHALTGETRIEBE UND VERFAHREN ZUR ERFASSUNG DER GEOMETRISCHEN EIGENSCHAFTEN DER SCHALTKULISSE
CONTROL DEVICE FOR ROBOTIZED GEARBOX AND METHOD FOR AUTOMATICALLY DETERMINING GEOMETRIC FEATURES OF THE CONTROL GRID THEREOF

(30) Priorité: 28.03.2003 FR 0303915
(43) Date de publication de la demande: 28.12.2005
(73) Titulaire: VALEO EMBRAYAGES, 80009 Amiens (FR)
(72) Inventeur: GEFFROY, Pascal, F-80000 AMIENS (FR); DUTIER, Ivan, F-80000 AMIENS (FR)
(74) Mandataire: Vignesoult, Serge L. M.
(86) Numéro de dépôt international: PCT/FR2004/050130
(87) Numéro de publication internationale: WO 2004/088177

(56) Documents cités:
- EP-A- 0 599 511
- FR-A- 2 764 031
- FR-A- 2 795 831
- US-A- 6 003 649

## Description

La présente invention concerne un dispositif de commande de boîte de vitesses robotisée et un procédé de détermination automatique de particularités géométriques de la grille de commande de ce dispositif.

On connaît déjà dans l'état de la technique, notamment d'après FR-2 803 357 (FR-99 16797), un dispositif de commande de boîte de vitesses robotisée, du type comprenant :
- un organe de commande guidé suivant des directions sensiblement perpendiculaires de sélection et de passage de vitesse définissant une grille de commande, et
- au moins un actionneur de sélection ou de passage de vitesse relié à l'organe de commande par des moyens élastiques.

Habituellement, l'organe de commande est guidé suivant les directions de sélection et de passage de vitesse par divers éléments de la boîte de vitesses. Les différents trajets possibles de l'organe de commande définissent un contour imaginaire constituant la grille de commande.

De façon classique, la grille de commande comporte un couloir de sélection et deux ou trois couloirs de passage.

Le dispositif de commande de boîte de vitesses robotisée a pour fonction notamment de déterminer, préalablement à une utilisation normale de la boîte de vitesses, certaines particularités géométriques de la grille afin plus particulièrement de pouvoir initialiser les automatismes.

FR-A-2 796 118 (FR-00 08974) décrit un procédé de détermination automatique de particularités géométriques de la grille de commande appliqué à un dispositif de commande de boîte de vitesses d'un type différent de celui décrit dans le premier document cité FR-2 803 357. En particulier, le dispositif de commande décrit dans le second document FR-A-2 796 118 ne comporte pas d'actionneur de passage ou de sélection de vitesse relié à l'organe de commande par des moyens élastiques.

Le procédé décrit dans FR-A-2 796 118 prévoit la réalisation automatique d'une séquence de déplacements de l'organe de commande au cours de laquelle l'actionneur de passage ou de sélection est déplacé par incréments successifs de façon que l'organe de commande réalise un mouvement de "picotage" le long de certaines parties du contour de la grille.

L'invention a notamment pour but d'équiper un dispositif de commande du type décrit dans FR-2 803 357 de moyens rapides et efficaces de détermination automatique de particularités géométriques de la grille de commande.

A cet effet, l'invention a pour objet un dispositif de commande de boîte de vitesses robotisée, du type précité, caractérisé en ce qu'il comprend des moyens de détermination automatique de particularités géométriques de la grille de commande comportant des moyens de commande automatique d'une séquence de déplacements de l'organe de commande susceptibles de piloter l'actionneur de sélection ou de passage par asservissement au moins à l'effort de compression exercé par l'actionneur de sélection ou de passage sur les moyens de liaison élastiques.

Suivant d'autres caractéristiques de ce dispositif de commande de boîte de vitesses robotisée :
- les moyens de commande automatique sont également susceptibles de piloter l'actionneur de sélection ou de passage par asservissement à la position et/ou la vitesse de cet actionneur de sélection ou de passage ;
- le dispositif comprend des moyens formant capteur choisis parmi :
   ■ des moyens formant capteur de position de l'actionneur de sélection ou de passage,
   ■ des moyens formant capteur de vitesse de l'actionneur de sélection ou de passage, et
   ■ des moyens formant capteur d'effort de compression exercé par l'actionneur de sélection ou de passage sur les moyens de liaison élastiques ;
- les particularités géométriques à déterminer comprennent des points singuliers d'un polygone concave délimitant la grille de commande ou coïncidant avec cette grille aux emplacements de ces points singuliers, le polygone concave délimitant un couloir de sélection et des couloirs de passage ;
- les points singuliers comprennent des sommets de côtés concaves horizontaux, ces sommets étant appelés butées de point mort ;
- chaque couloir de passage comprend au moins une extrémité de passage d'un rapport, les points singuliers comprenant, pour chaque extrémité de passage d'un rapport, un point, dit butée de passage, situé sur un côté convexe horizontal délimitant cette extrémité et deux points, dits butées de sélection, situés respectivement sur deux côtés verticaux, adjacents au côté convexe horizontal, ces butées de passage et de sélection étant encore appelés butées de grille ;
- le dispositif comprend deux actionneurs, respectivement de sélection et de passage de vitesse, reliés chacun à l'organe de commande par des moyens élastiques.

L'invention a également pour objet un procédé de détermination automatique de particularités géométriques de la grille de commande d'un dispositif fiel que défini ci-dessus, **caractérisé en ce que** l'on détermine chaque particularité par réalisation automatique d'une séquence de déplacements de l'organe de commande au cours de laquelle l'actionneur de sélection ou de passage est piloté, au moins pour un déplacement de cette séquence, par asservissement à l'effort de compression exercé par l'actionneur de sélection ou de passage sur les moyens de liaison élastiques.

Suivant d'autres caractéristiques de ce procédé :
- la séquence de déplacements de l'organe de commande comporte une sous-séquence au cours de laquelle on réalise :
   - un déplacement par rainurage R de l'organe de commande, c'est à dire en appui contre un côté vertical ou concave incliné du polygone, par asservissement :
      ■ en compression de l'actionneur de sélection, et
      ■ en vitesse de l'actionneur de passage ;
- au cours de la sous-séquence, on réalise au moins un autre déplacement choisi parmi :
   - un déplacement vertical V/PP de l'organe de commande, par asservissement en position des actionneurs de sélection et de passage,
   - un déplacement vertical V/PV de l'organe de commande, par asservissement :
      ■ en position de l'actionneur de sélection, et
      ■ en vitesse puis compression de l'actionneur de passage,
   - un déplacement horizontal H/PP de l'organe de commande, par asservissement en position des actionneurs de sélection et de passage,
   - un déplacement horizontal H/VP de l'organe de commande, par asservissement :
      □ en vitesse de l'actionneur de sélection, et
      □ en position de l'actionneur de passage ;
- la séquence de déplacements de l'organe de commande comporte une sous-séquence A au cours de laquelle on étalonne les moyens formant capteur ;
   o la séquence de déplacements de l'organe de commande comporte une sous-séquence B de localisation d'un point prédéterminé, dit point d'origine, choisi parmi les quatre coins du polygone ;
   o la séquence de déplacements de l'organe de commande comporte une sous-séquence C de localisation des butées de point mort ;
   o la sous-séquence C de localisation des butées de point mort comprend les étapes de :
      C1) localisation d'une butée de point mort,
      C2) repositionnement de l'organe de commande pour la localisation subséquente d'une autre butée de point mort ;
- la séquence de déplacements de l'organe de commande comporte une sous-séquence D de vérification de la possibilité d'exécution d'une trajectoire rectiligne de l'organe de commande sur toute la longueur du couloir de sélection défini par les butées de point mort ;
- la séquence de déplacements de l'organe de commande comporte une sous-séquence E de localisation des butées de grille ;
- chaque couloir de passage de la grille de commande comprenant deux demi-couloirs de passage respectivement supérieur et inférieur, la sous-séquence E de localisation des butées de grille comprend les étapes de :
   E1) positionnement de l'organe de commande sensiblement en un point Mᵢ milieu de l'intersection du couloir de sélection et d'un couloir de passage,
   E2) détermination de la butée de passage et des deux butées de sélection d'un des deux demi-couloirs de passage supérieur et inférieur,
   E3) retour de l'organe de commande sensiblement au point milieu Mᵢ, les étapes E1) à E3) étant réalisées successivement, la succession des deux étapes E2) et E3) étant réitérée jusqu'à détermination des butées de grille des deux extrémités d'un même couloir de passage, après quoi, l'étape E3) est suivie de l'étape E1) pour positionner l'organe de commande sensiblement en un point Mᵢ₊₁ milieu de l'intersection du couloir de sélection et d'un couloir de passage ;

   o la sous-séquence B de localisation du point d'origine comprend les étapes de :
      B1) déplacement vertical V/PV de l'organe de commande,
      B2) déplacement vertical V/PP de l'organe de commande, dans un sens opposé au déplacement de l'étape B1),
      B3) déplacement horizontal HNP de l'organe de commande, vers le point d'origine,
      B4) déplacement par rainurage R de l'organe de commande, dans un sens opposé au sens de l'étape B1),
      B5) déplacement par rainurage R de l'organe de commande, dans le même sens que celui de l'étape B1),
      l'enchaînement des étapes B1) à B5) étant réalisé dans les conditions suivantes :
      - la sous-séquence B commence par l'étape B1) et se termine par l'étape B5),
      - on passe de l'étape B1) à l'étape B2) lorsque l'effort EP exercé par l'actionneur de passage sur les moyens de liaison élastique associés est supérieur à un seuil prédéterminé, traduisant ainsi que l'organe de commande a atteint un côté convexe horizontal,
      - on passe de l'étape B2) à l'étape B3) lorsque l'organe de commande a parcouru une distance prédéterminée,
      - on passe de l'étape B3) à l'étape B4) lorsque l'actionneur de sélection détecte une butée, traduisant ainsi que l'organe de commande a atteint un côté vertical ou concave incliné,
      - on passe de l'étape B4) à l'étape B3) lorsque l'effort ES exercé par l'actionneur de sélection sur les moyens de liaison élastique associés est inférieur à un seuil prédéterminé,
      - on passe de l'étape B4) à l'étape B5) lorsque l'actionneur de passage détecte une butée, traduisant ainsi que l'organe de commande a atteint, à la fin de l'étape B4), un côté convexe horizontal,
      - on interrompt l'étape B5) lorsque l'actionneur de passage détecte une butée, traduisant ainsi que l'organe de commande a atteint, à la fin de l'étape B5), un côté convexe horizontal opposé à celui de l'étape B4), la position de l'organe de commande coïncidant alors avec celle du point d'origine qui est ensuite mémorisée ;
- l'étape C1) de localisation d'une butée de point mort comprend les sous étapes suivantes :
   C1.1) à partir d'un point initial, déplacement vertical V/PP de l'organe de commande,
   C1.2) déplacement horizontal H/VP de l'organe de commande,
   C1.3) déplacement par rainurage R de l'organe de commande, dans le même sens que celui de l'étape C1.1),
   l'enchaînement des étapes C1.1) à C1.3) étant réalisé dans les conditions suivantes :
   - on passe de l'étape C1.1) à l'étape C1.2) lorsque l'organe de commande a parcouru une distance prédéterminée,
   - on passe de l'étape C1.2) à l'étape C1.3) lorsque l'actionneur de sélection détecte une butée, traduisant ainsi que l'organe de commande a atteint un côté vertical ou concave incliné,
   - on interrompt l'étape C1.3) lorsque l'effort ES exercé par l'actionneur de sélection sur les moyens de liaison élastique associés est inférieur à un seuil prédéterminé, la position de l'organe de commande coïncidant avec le passage de ce seuil correspondant à celle d'une butée de point mort dont la position est alors mémorisée ;
- on exécute pour la première fois l'étape C1.1 ) à partir du point d'origine ;
- l'étape C2) de repositionnement de l'organe de commande pour la localisation subséquente d'une autre butée de point mort comprend les sous étapes suivantes :
   C2.1) déplacement horizontal H/PP de l'organe de commande, dans le même sens que celui de l'étape C1.2),
   C2.2) déplacement vertical V/PV de l'organe de commande,
   l'enchaînement des étapes C2.1) et C2.2) étant réalisé dans les conditions suivantes :
   - on passe de l'étape C2.1) à l'étape C2.2) lorsque l'organe de commande a parcouru une distance prédéterminée,
   - on interrompt l'étape C2.2) lorsque l'effort EP exercé par l'actionneur de passage sur les moyens de liaison élastique associés est supérieur à un seuil prédéterminé, traduisant ainsi que l'organe de commande a atteint un côté convexe horizontal, la position de l'organe de commande coïncidant alors avec celle d'un nouveau point initial pour l'étape C1.1) ;
- l'étape C2) de repositionnement de l'organe de commande pour la localisation subséquente d'une autre butée de point mort comprend les sous étapes suivantes :
   C2.1') déplacement horizontal H/VP de l'organe de commande, dans le même sens que celui de l'étape C1.2),
   C2.2') déplacement horizontal H/PP de l'organe de commande, dans un sens opposé à celui de l'étape C2.1'),
   C2.3') déplacement vertical V/PV de l'organe de commande,
   l'enchaînement des étapes C2.1') à C2.3') étant réalisé dans les conditions suivantes :
   - on passe de l'étape C2.1') à l'étape C2.2') lorsque l'actionneur de sélection détecte une butée, traduisant ainsi que l'organe de commande a atteint un côté vertical,
   - on passe de l'étape C2.2') à l'étape C2.3') lorsque l'organe de commande a parcouru une distance prédéterminée,
   - on interrompt l'étape C2.3') lorsque l'effort EP exercé par l'actionneur de passage sur les moyens de liaison élastique associés est supérieur à un seuil prédéterminé, traduisant ainsi que l'organe de commande a atteint un côté convexe horizontal, la position de l'organe de commande coïncidant alors avec celle d'un nouveau point initial pour l'étape C1.1) ;
- la sous-séquence D de vérification de la possibilité d'exécution d'une trajectoire rectiligne de l'organe de commande sur toute la longueur du couloir de sélection défini par les butées de point mort comprend les étapes de :
   D1) à partir d'un point situé sensiblement au milieu du couloir de sélection, déplacement horizontal H/VP de l'organe de commande,
   D2) déplacement horizontal H/VP de l'organe de commande, dans un sens opposé à celui de l'étape D1,
   l'enchaînement des étapes D1) et D2) étant réalisé dans les conditions suivantes :
   - on passe de l'étape D1) à l'étape D2) lorsque l'actionneur de sélection détecte une butée, traduisant ainsi que l'organe de commande a atteint, à la fin de l'étape D1, un côté vertical ou concave incliné,
   - on interrompt l'étape D2) lorsque l'actionneur de sélection détecte une butée, traduisant ainsi que l'organe de commande a atteint un côté vertical ou concave incliné opposé à celui de l'étape D1 ;
- l'étape E1) de positionnement de l'organe de commande sensiblement au point milieu Mᵢ d'un couloir de passage (CPᵢ) comprend un déplacement horizontal H/PP de l'organe de commande d'une distance prédéterminée ;
- l'étape E2) de détermination des butées de passage et de sélection comprend les sous-étapes suivantes :
   E2.1) déplacement vertical V/PV de l'organe de commande,
   E2.2) déplacement vertical V/PP de l'organe de commande, dans un sens opposé au déplacement de l'étape E2.1),
   E2.3) déplacement horizontal HNP de l'organe de commande,
   E2.4) déplacement horizontal H/VP de l'organe de commande, dans un sens opposé à celui de l'étape E2.3),
   l'enchaînement des étapes E2.1) à E2.4) étant réalisé dans les conditions suivantes :
   - on passe de l'étape E2.1) à l'étape E2.2) lorsque l'effort EP exercé par l'actionneur de passage sur les moyens de liaison élastique associés est supérieur à un seuil prédéterminé, traduisant ainsi que l'organe de commande a atteint un côté convexe horizontal, la position de l'organe de commande coïncidant alors avec celle de la butée de passage qui est ensuite mémorisée,
   - on passe de l'étape E2.2) à l'étape E2.3) lorsque l'organe de commande a parcouru une distance prédéterminée,
   - on passe de l'étape E2.3) à l'étape E2.4) lorsque l'actionneur de sélection détecte une butée, traduisant ainsi que l'organe de commande a atteint, à la fin de l'étape E2.3), un côté vertical, la position de l'organe de commande coïncidant alors avec celle d'une première butée de sélection qui est ensuite mémorisée,
   - on interrompt l'étape E2.4) lorsque l'actionneur de sélection détecte une butée, traduisant ainsi que l'organe de commande a atteint, à la fin de l'étape E2.4), un côté vertical opposé à celui de l'étape E2.4), la position de l'organe de commande coïncidant alors avec celle de la seconde butée de sélection qui est ensuite mémorisée ;
- l'étape E2) de détermination des butées de passage et de sélection comprend les sous-étapes suivantes précédant l'étape E2.1) :
   E2.1') déplacement horizontal H/PP de l'organe de commande d'une distance prédéterminée,
   E2.2') déplacement oblique O/PP de l'organe de commande, d'une distance prédéterminée, par asservissement :
      ■ en position de l'actionneur de sélection, et
      ■ en position de l'actionneur de passage, par rapport à la position de l'actionneur de sélection ;
- l'étape E3) de retour de l'organe de commande sensiblement au point milieu Mᵢ comprend les sous-étapes suivantes :
   E3.1) déplacement horizontal H/PP de l'organe de commande, d'une distance prédéterminée, suivi du
   E3.2) déplacement vertical V/PP de l'organe de commande, d'une distance prédéterminée ;
      - l'étape E3) de retour de l'organe de commande sensiblement au point milieu Mᵢ comprend également la sous-étape suivante :
         E3.3) déplacement oblique O/PP de l'organe de commande, d'une distance prédéterminée.

L'invention sera mieux comprise à la lecture de la description qui va suivre, donnée uniquement à titre d'exemple et faite en se référant aux dessins annexés dans lesquels :
- la figure 1 est une vue schématique d'un dispositif de commande de boîte de vitesses robotisée selon l'invention ;
- les figures 2 à 8 sont des vues schématiques de la grille de commande montrant, le cas échéant, différents trajets de l'organe de commande.

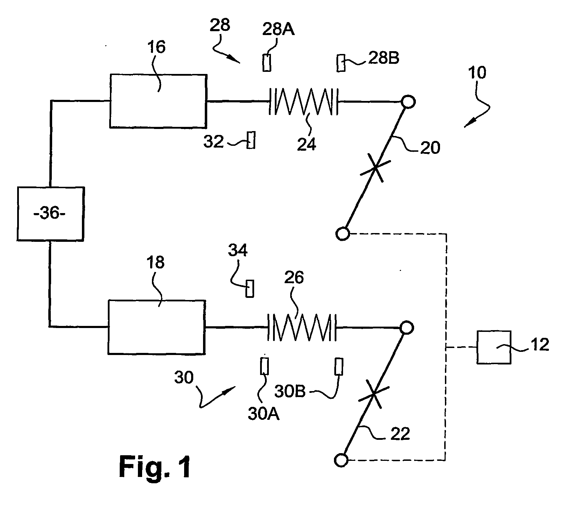

On a représenté sur la figure 1 un dispositif de commande de boîte de vitesses robotisée, selon l'invention, désigné par la référence générale 10.

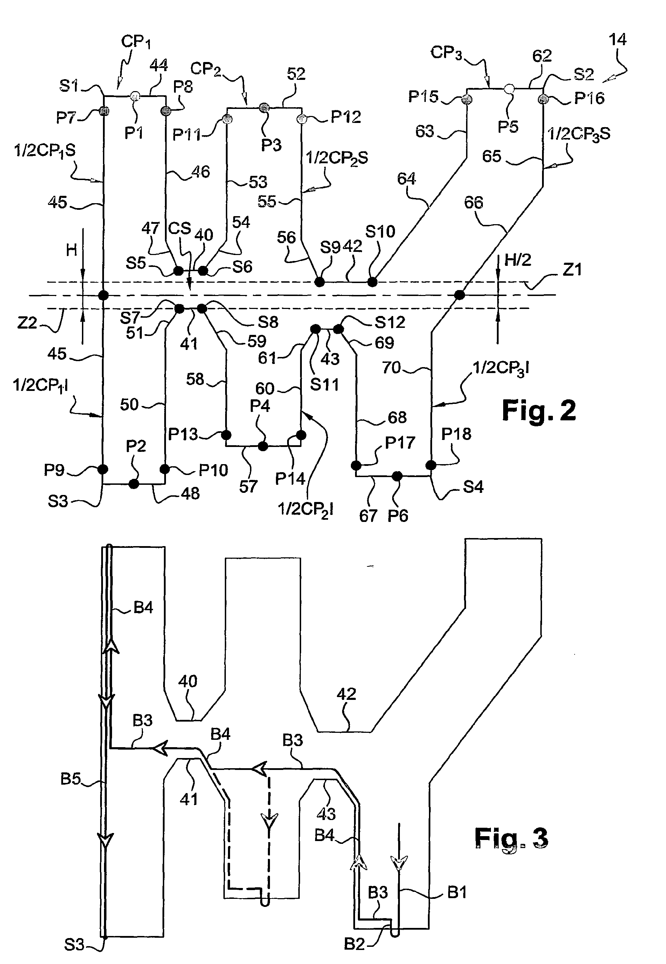

Ce dispositif de commande 10 comprend un organe de commande classique 12 guidé suivant des directions sensiblement perpendiculaires de sélection et de passage de vitesse définissant une grille de commande 14 représentée sur les figures 2 et suivantes.

Le dispositif 10 comprend également deux actionneurs électromécaniques classiques, respectivement de sélection 16 et de passage 18 de vitesse. Chaque actionneur 16, 18 est relié à un levier connu en soi 20, 22 par des moyens élastiques 24, 26. Les leviers de sélection 24 et de passage 26 sont montés articulés sur la boîte de vitesses et couplés de façon connue en soi à l'organe de commande 12. Chaque actionneur 16, 18 est donc relié à l'organe de commande 12 par l'intermédiaire d'une chaîne cinématique, dite, selon le cas, chaîne de sélection ou de passage, comportant des moyens élastiques 24, 26. Ces moyens 24, 26 élastiques comprennent généralement des ressorts de compression.

Le dispositif 10 comprend encore des premiers moyens 28 formant capteur d'effort de compression exercé par l'actionneur de sélection sur les moyens de liaison élastiques 24 et des seconds moyens 30 formant capteur d'effort de compression exercé par l'actionneur de passage sur les moyens de liaison élastiques 26.

Dans l'exemple illustré, les premiers moyens 28 formant capteur d'effort comprennent deux capteurs de position 28A, 28B permettant de déterminer l'effort à partir de la raideur des moyens élastiques 24 et de la position relative de deux points des moyens élastiques 24 caractérisant la compression de ces moyens élastiques 24. Les deux capteurs de position 28A, 28B indiquent respectivement les positions de deux éléments situés respectivement en amont et en aval des moyens élastiques 24 de la chaîne cinématique de sélection. De même, les seconds moyens 30 formant capteur d'effort comprennent deux capteurs de position 30A, 30B permettant de déterminer l'effort à partir de la raideur des moyens élastiques 26 et de la position relative de deux points des moyens élastiques 26 caractérisant la compression de ces moyens élastiques 26. Les deux capteurs de position 30A, 30B indiquent respectivement les positions de deux éléments situés respectivement en amont et en aval des moyens élastiques 26 de la chaîne cinématique de sélection.

En variante, d'autres types de moyens formant capteur d'effort pourrait être utilisés.

La position de chaque actionneur de passage 18 et de sélection 16 est déterminée à partir de moyens formant capteur de position comprenant par exemple au moins un des deux capteurs 28A, 28B, 30A, 30B associé à chaque actionneur 16, 18.

Par ailleurs, la vitesse de déplacement de chaque actionneur de sélection 16 et de passage 18 est déterminée à partir de moyens classiques 32, 34 formant capteur de vitesse. Ces moyens 32, 34 peuvent comprendre un compte-tours ou des moyens de mesure de courant circulant dans un bobinage de moteur d'actionneur.

Le dispositif 10 comprend en outre des moyens de détermination automatique de particularités géométriques de la grille de commande comportant des moyens classiques 36 de commande automatique d'une séquence de déplacements de l'organe de commande 12 susceptibles de piloter les actionneurs de sélection 16 et de passage 18. Ce pilotage est réalisé, pour chaque actionneur de sélection 16 ou de passage 18 par asservissement au moins à l'effort de compression exercé par l'actionneur 16, 18 sur les moyens de liaison élastiques 24, 26 correspondants.

Les moyens de commande automatique 36 sont également susceptibles de piloter les actionneurs de sélection 16 et de passage 18 par asservissement à la position et/ou la vitesse de ces actionneurs.

Par conséquent, les moyens de commande automatique 36 sont susceptibles de piloter les actionneurs de sélection 16 et de passage 18 par asservissement de chacun de ces actionneurs 16, 18 à un paramètre choisi parmi l'effort de compression, la position et la vitesse de cet actionneur.

Les particularités géométriques à déterminer de la grille de commande 14 comprennent des points singuliers d'un polygone concave (illustré sur les figures 2 et suivantes) délimitant la grille 14 ou coïncidant avec cette grille 14 aux emplacements de ces points singuliers.

La grille de commande 14, formée par le polygone concave, délimite un couloir de sélection CS et des couloirs de passage. Dans l'exemple décrit, la grille 14 comprend des premier CP₁, deuxième CP₂ et troisième CP₃ couloirs de passage.

Dans ce qui suit, on adoptera les conventions suivantes :
- un angle du polygone est un angle intérieur de ce polygone,
- un côté du polygone est qualifié de "convexe" lorsqu'il délimite deux angles consécutifs convexes et de "concave" lorsqu'il délimite deux angles consécutifs "concaves",
- un côté du polygone est qualifié de "semi-convexe" lorsqu'il délimite deux angles consécutifs respectivement convexe et concave,
- un élément, notamment un côté du polygone, est qualifié de d"'horizontal" lorsque cet élément est sensiblement parallèle à la direction de sélection, de "vertical" lorsque cet élément est sensiblement parallèle à la direction de passage, et d"'incliné" lorsque cet élément est incliné par rapport aux directions de sélection et de passage,
- un élément, notamment un côté ou une partie de côté du polygone, est qualifié de "supérieur" lorsque cet élément s'étend au dessus du couloir de sélection et d'"inférieur" lorsque cet élément s'étend en dessous du couloir de sélection,
- deux éléments sont dits de même hauteur lorsqu'ils sont tous les deux qualifiés d'inférieur ou tous les deux qualifiés de supérieurs,
- le polygone comporte quatre sommets particuliers ou coins S1 à S4 définis de la façon suivante :
   - le coin supérieur gauche S1 est le sommet du polygone situé le plus haut et le plus à gauche du polygone,
   - le coin supérieur droit S2 est le sommet du polygone situé le plus haut et le plus à droite du polygone,
   - le coin inférieur gauche S3 est le sommet du polygone situé le plus bas et le plus à gauche du polygone,
   - le coin inférieur droit S4 est le sommet du polygone situé le plus bas et le plus à droite du polygone,
- les premier CP₁, deuxième CP₂ et troisième CP₃ couloirs de passage sont positionnés successivement de gauche à droite, le premier couloir de passage CP₁ autorisant, dans l'exemple décrit, le passage d'un premier rapport de vitesse dans sa partie supérieure.

Chaque couloir de passage CP₁, CP₂, CP₃ comprend deux demi-couloirs de passage respectivement supérieur ½CP₁S, ½CP₂S, ½CP₃S et inférieur ½CP₁I, ½CP₂I, ½CP₃I.

Le couloir de sélection CS est délimité par deux premiers côtés concaves horizontaux, respectivement supérieur 40 et inférieur 41, reliant les premier CP₁ et deuxième CP₂ couloirs de passage, et deux seconds côtés concaves horizontaux, respectivement supérieur 42 et inférieur 43, reliant les deuxième CP₂ et troisième CP₃ couloirs de passage.

Le premier demi-couloir de passage supérieur ½CP₁S est délimité par :
- un côté convexe horizontal supérieur 44, formant une extrémité de ce demi-couloir ½CP₁S ou extrémité de passage d'un rapport,
- un côté convexe vertical gauche 45, adjacent au côté convexe horizontal 44,
- un côté semi-convexe vertical droit 46, adjacent au côté convexe horizontal 44, et
- un côté concave incliné droit 47 reliant le côté semi-convexe vertical droit 46 au premier côté concave horizontal supérieur 40.

Le premier demi-couloir de passage inférieur ½CP₁I est délimité par :
- un côté convexe horizontal inférieur 48, formant une extrémité de ce demi-couloir ½CP₁I ou extrémité de passage d'un rapport,
- un côté convexe vertical gauche 45, adjacent au côté convexe horizontal et commun avec le premier demi-coulôir de passage supérieur,
- un côté semi-convexe vertical droit 50, adjacent au côté convexe horizontal 48, et
- un côté concave incliné droit 51 reliant le côté semi-convexe vertical droit 50 au premier côté concave horizontal inférieur 41.

Le deuxième demi-couloir de passage supérieur ½CP₂S est délimité par :
- un côté convexe horizontal supérieur 52, formant une extrémité de ce demi-couloir ½CP₂S ou extrémité de passage d'un rapport,
- un côté semi-convexe vertical gauche 53, adjacent au côté convexe horizontal 52,
- un côté concave incliné gauche 54 reliant le côté semi-convexe vertical gauche 53 au premier côté concave horizontal supérieur 40,
- un côté semi-convexe vertical droit 55, adjacent au côté convexe horizontal, et
- un côté concave incliné droit 56 reliant le côté semi-convexe vertical droit 55 au second côté concave horizontal supérieur 42.

Le deuxième demi-couloir de passage inférieur ½CP₂I est délimité par :
- un côté convexe horizontal inférieur 57, formant une extrémité de ce demi-couloir ½CP₂I ou extrémité de passage d'un rapport,
- un côté semi-convexe vertical gauche 58, adjacent au côté convexe horizontal 57,
- un côté concave incliné gauche 59 reliant le côté semi-convexe vertical gauche 58 au premier côté concave horizontal inférieur 41,
- un côté semi-convexe vertical droit 60, adjacent au côté convexe horizontal 57, et
- un côté concave incliné droit 61 reliant le côté semi-convexe vertical droit 60 au second côté concave horizontal inférieur 43.

Le troisième demi-couloir de passage supérieur ½CP₃S est délimité par :
- un côté convexe horizontal supérieur 62, formant une extrémité de ce demi-couloir ½CP₃S ou extrémité de passage d'un rapport,
- un côté semi-convexe vertical gauche 63, adjacent au côté convexe horizontal 62,
- un côté concave incliné gauche 64 reliant le côté semi-convexe vertical gauche 63 au second côté concave horizontal supérieur 42,
- un côté semi-convexe vertical droit 65, adjacent au côté convexe horizontal 62, et
- un côté concave incliné droit 66 délimitant un angle convexe avec le côté semi-convexe vertical droit 65.

Le demi-couloir de passage supérieur ½CP₃S est destiné au passage d'un rapport de marche arrière.

Le troisième demi-couloir de passage inférieur ½CP₃I est délimité par :
- un côté convexe horizontal inférieur 67, formant une extrémité de ce demi-couloir ½CP₃I ou extrémité de passage d'un rapport,
- un côté semi-convexe vertical gauche 68, adjacent au côté convexe horizontal 67,
- un côté concave incliné gauche 69 reliant le côté semi-convexe vertical gauche 68 au second côté concave horizontal inférieur 43,
- un côté semi-convexe vertical droit 70, adjacent au côté convexe horizontal 67 et délimitant un angle concave avec le côté concave incliné droit 66 du troisième demi-couloir de passage supérieur ½CP₃S.

Les points singuliers à déterminer comprennent des sommets de côtés concaves horizontaux, ces sommets étant appelés butées de point mort S5 à S12.

Les points singuliers à déterminer comprennent également, pour chaque extrémité de passage d'un rapport, un point, dit butée de passage P1 à P6, situé sur un côté convexe horizontal 44, 48, 52, 57, 62, 67 délimitant cette extrémité et deux points, dits butées de sélection P7 à P18, situés respectivement sur deux côtés verticaux, adjacents au côté convexe horizontal.

Les butées de passage P1 à P6 et de sélection P7 à P18 sont encore appelés butées de grille.

On décrira ci-dessous un exemple de réalisation d'un procédé selon l'invention, susceptible d'être mis en oeuvre par le dispositif de commande 10, pour déterminer automatiquement les particularités géométriques de la grille de commande 14.

Selon ce procédé, on détermine chaque particularité par réalisation automatique, à l'aide des moyens 36, d'une séquence de déplacements de l'organe de commande 12 au cours de laquelle au moins un des actionneurs de sélection 16 et de passage 18 est piloté, au moins pour un déplacement de cette séquence, par asservissement à l'effort de compression exercé par l'actionneur de sélection 16 ou de passage 18 sur les moyens de liaison élastiques 24, 26 correspondants.

Comme cela ressortira plus clairement par la suite, la séquence de déplacements de l'organe de commande 12 comporte au moins une sous-séquence au cours de laquelle on réalise un déplacement par rainurage R de l'organe de commande 12, c'est à dire en appui contre un côté vertical ou concave incliné du polygone formant la grille 14, par asservissement :
■ en compression de l'actionneur de sélection 16, et
■ en vitesse de l'actionneur de passage 18.

Le déplacement par rainurage de l'organe de commande 12 s'avère plus simple et rapide à réaliser que le déplacement par picotage décrit notamment dans FR-A-2796118.

De préférence, au cours de la sous-séquence, on réalise au moins un autre déplacement choisi parmi :
- un déplacement vertical V/PP de l'organe de commande 12, par asservissement en position des actionneurs de sélection 16 et de passage 18,
- un déplacement vertical V/PV de l'organe de commande 12, par asservissement :
   ■ en position de l'actionneur de sélection 16, et
   ■ en vitesse puis compression de l'actionneur de passage 18,
- un déplacement horizontal H/PP de l'organe de commande 12, par asservissement en position des actionneurs de sélection 16 et de passage 18,
- un déplacement horizontal H/VP de l'organe de commande, par asservissement :
   □ en vitesse de l'actionneur de sélection 16, et
   □ en position de l'actionneur de passage 18.

Les asservissements des actionneurs 16, 18 en position, vitesse ou compression pourront se faire, selon le cas, en boucle ouverte ou fermée.

Dans l'exemple décrit, la séquence de déplacements de l'organe de commande 12 comprend essentiellement les cinq sous-séquences successives A à E suivantes :
- sous-séquence A au cours de laquelle on étalonne les moyens formant capteurs 28, 32,
- sous-séquence B de localisation d'un point prédéterminé, dit point d'origine,
- sous-séquence C de localisation des butées de point mort S5 à S12,
- sous-séquence D de vérification de la possibilité d'exécution d'une trajectoire rectiligne de l'organe de commande 12 sur toute la longueur du couloir de sélection CS,
- sous-séquence E de localisation des butées de grille P1 à P18.

Dans ce qui suit, on appellera détection de butée par un actionneur de sélection 16 ou de passage 18 un événement au cours duquel :
- on détecte l'arrêt du déplacement d'un élément de la chaîne cinématique de sélection ou de passage situé en aval des moyens élastiques 24, 26 (par exemple à l'aide des capteurs de position 28B, 30B), ou
- on détecte l'augmentation au delà d'un seuil prédéterminé de l'effort de compression exercé par l'actionneur de sélection 16 ou de passage 18 sur les moyens élastiques 24, 26 de la chaîne cinématique de sélection ou de passage,ou
- on détecte la chute en dessous d'un seuil prédéterminé de la distance relative de deux éléments situés respectivement en amont et en aval des moyens élastiques 24, 26 de la chaîne cinématique de sélection ou de passage (par exemple à l'aide des capteurs de position 28A, 28B, 30A, 30B), ou
- on détecte la chute en dessous d'un seuil prédéterminé de la vitesse de l'actionneur de sélection 16 ou de passage 18 (par exemple à l'aide des capteurs de vitesse 32, 34), ou
- on détecte l'augmentation au delà d'un seuil prédéterminé du courant d'alimentation de l'actionneur de sélection 16 ou de passage 18 (courant circulant dans un bobinage de moteur de l'actionneur).

### Sous-séquence A

Au cours de cette sous-séquence A, les moyens de commande automatique 36 étalonnent les moyens formant capteurs 28, 32 en réalisant par exemple :
- des déplacements verticaux opposés de l'organe de commande 12 dans le deuxième couloir de passage CP₂ de manière à amener cet organe de commande 12 en butée successivement sur les deux extrémités 52, 57 de ce couloir CP₂, puis
- des déplacements horizontaux opposés de l'organe de commande 12 dans le couloir de sélection CS de manière à amener cet organe de commande 12 en butée successivement sur deux extrémités de ce couloir CS.

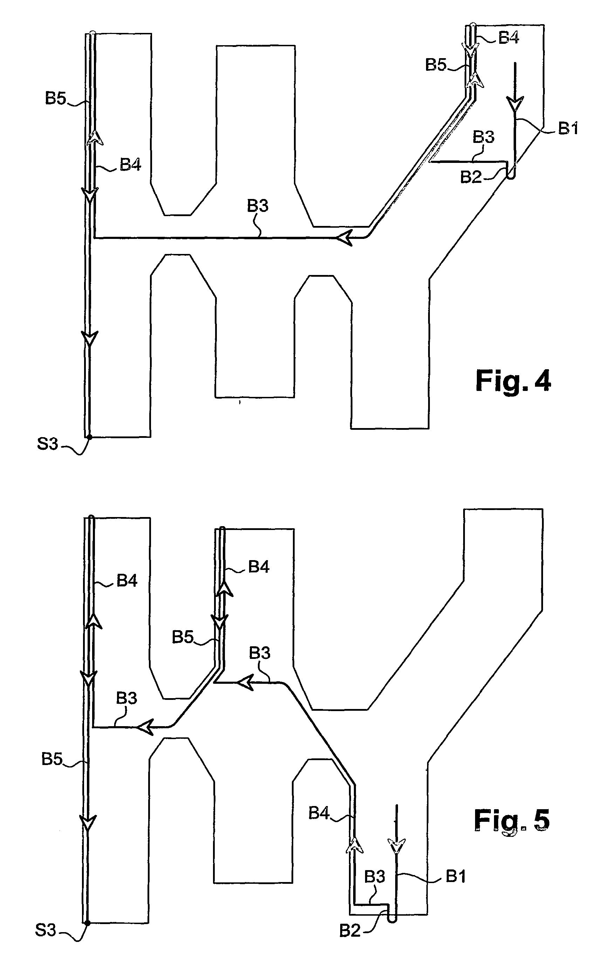

### Sous-séquence B (voir figures 3 à 5).

Le point d'origine est choisi parmi les quatre coins du polygone. Dans le mode de réalisation décrit, le point d'origine choisi est le coin inférieur gauche S3 (sommet du polygone situé le plus bas et le plus à gauche du polygone).

Les figures 3 à 5 illustrent trois exemples de trajet de l'organe de commande 12 réalisé par exécution de la sous-séquence B à partir de trois positions initiales différentes de l'organe de commande 12. Le sens d'exécution du trajet est représenté par des flèches.

La sous-séquence B de localisation du point d'origine S3 comprend les étapes de:
B1) déplacement vertical V/PV de l'organe de commande 12,
B2) déplacement vertical V/PP de l'organe de commande 12, dans un sens opposé au déplacement de l'étape B1),
B3) déplacement horizontal H/VP de l'organe de commande 12, vers le point d'origine,
B4) déplacement par rainurage R de l'organe de commande 12, dans un sens opposé au sens de l'étape B1),
B5) déplacement par rainurage R de l'organe de commande 12, dans le même sens que celui de l'étape B1).

L'enchaînement des étapes B1) à B5) est réalisé dans les conditions suivantes :
- la sous-séquence B commence par l'étape B1) et se termine par l'étape B5),
- on passe de l'étape B1) à l'étape B2) lorsque l'effort EP exercé par l'actionneur de passage sur les moyens de liaison élastique associés est supérieur à un seuil prédéterminé, traduisant ainsi que l'organe de commande 12 a atteint un côté convexe horizontal,
- on passe de l'étape B2) à l'étape B3) lorsque l'organe de commande 12 a parcouru une distance prédéterminée,
- on passe de l'étape B3) à l'étape B4) lorsque l'actionneur de sélection 16 détecte une butée, traduisant ainsi que l'organe de commande 12 a atteint un côté vertical ou concave incliné,
- on passe de l'étape B4) à l'étape B3) lorsque l'effort ES exercé par l'actionneur de sélection 16 sur les moyens de liaison élastique associés 24 est inférieur à un seuil prédéterminé,
- on passe de l'étape B4) à l'étape B5) lorsque l'actionneur de passage 18 détecte une butée, traduisant ainsi que l'organe de commande 12 a atteint, à la fin de l'étape B4, un côté convexe horizontal,
- on interrompt l'étape B5) lorsque l'actionneur de passage 18 détecte une butée, traduisant ainsi que l'organe de commande 12 a atteint, à la fin de l'étape B5, un côté convexe horizontal opposé à celui de l'étape B4, la position de l'organe de commande 12 coïncidant alors avec celle du point d'origine S3 qui est ensuite mémorisée.

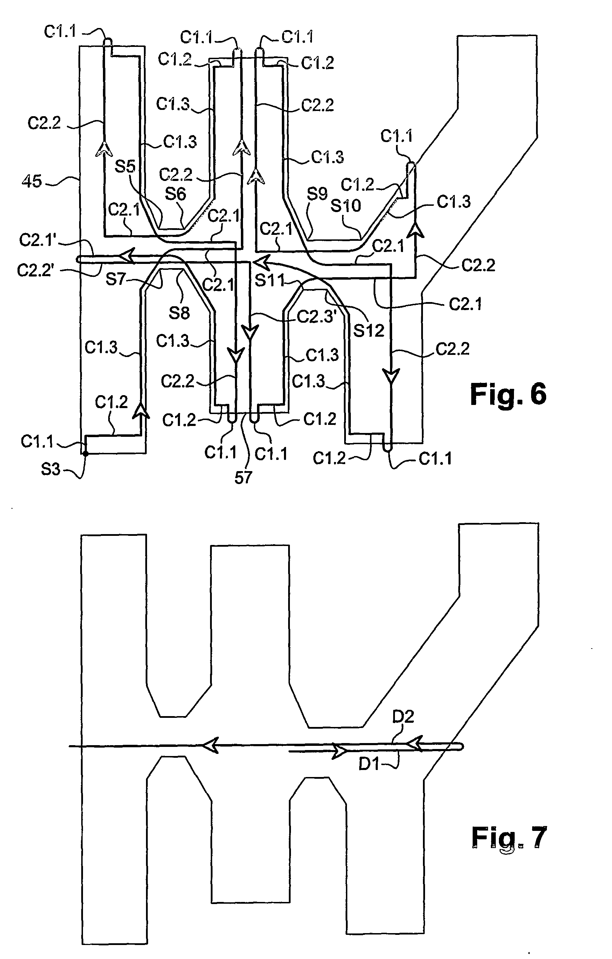

### Sous-séquence C (voir figure 6).

La sous-séquence C de localisation des butées de point mort S5 à S12 comprend les étapes de :
C1) localisation d'une butée de point mort S5 à S12,
C2) repositionnement de l'organe de commande 12 pour la localisation subséquente d'une autre butée de point mort S5 à S12.

Dans l'exemple décrit, les butées de point mort sont déterminées dans l'ordre suivant :

| | |
|---|---|
| Première butée de point mort : | S7 |
| Seconde butée de point mort : | S6 |
| Troisième butée de point mort : | S5 |
| Quatrième butée de point mort : | S8 |
| Cinquième butée de point mort : | S11 |
| Sixième butée de point mort: | S10 |
| Septième butée de point mort : | S9 |
| Huitième butée de point mort: | S12 |

L'étape C1) de localisation d'une butée de point mort S5 à S12 comprend les sous étapes suivantes :
C1.1) à partir d'un point initial, déplacement vertical V/PP de l'organe de commande 12,
C1.2) déplacement horizontal H/VP de l'organe de commande 12,
C1.3) déplacement par rainurage R de l'organe de commande 12, dans le même sens que celui de l'étape C1.1).

On exécute pour la première fois l'étape C1.1) à partir du point d'origine S3.

L'enchaînement des étapes C1.1) à C1.3) est réalisé dans les conditions suivantes :
- on passe de l'étape C1.1) à l'étape C1.2) lorsque l'organe de commande 12 a parcouru une distance prédéterminée,
- on passe de l'étape C1.2) à l'étape C1.3) lorsque l'actionneur de sélection 16 détecte une butée, traduisant ainsi que l'organe de commande 12 a atteint un côté vertical ou concave incliné,
- on interrompt l'étape C1.3) lorsque l'effort ES exercé par l'actionneur de sélection 16 sur les moyens de liaison élastique associés 24 est inférieur à un seuil prédéterminé, la position de l'organe de commande 12 coïncidant avec le passage de ce seuil correspondant à celle d'une butée de point mort S5 à S12 dont la position est alors mémorisée.

Excepté pour repositionner l'organe de commande 12, après avoir déterminé la quatrième butée de point mort S8 (selon l'ordre ci-dessus), afin de déterminer la cinquième butée de point mort S11, l'étape C2) de repositionnement de l'organe de commande 12 pour la localisation subséquente d'une autre butée de point mort comprend les sous étapes suivantes :
C2.1) déplacement horizontal H/PP de l'organe de commande 12, dans le même sens que celui de l'étape C1.2),
C2.2) déplacement vertical V/PV de l'organe de commande 12.

L'enchaînement des étapes C2.1) et C2.2) est réalisé dans les conditions suivantes :
- on passe de l'étape C2.1) à l'étape C2.2) lorsque l'organe de commande 12 a parcouru une distance prédéterminée;
- on interrompt l'étape C2.2) lorsque l'effort EP exercé par l'actionneur de passage 18 sur les moyens de liaison élastique associés 26 est supérieur à un seuil prédéterminé, traduisant ainsi que l'organe de commande 12 a atteint un côté convexe horizontal, la position de l'organe de commande 12 coïncidant alors avec celle d'un nouveau point initial pour l'étape C1.1).

Pour repositionner l'organe de commande 12, après avoir déterminé la quatrième butée de point mort S8 (selon l'ordre ci-dessus), afin de déterminer la cinquième butée de point mort S11, l'étape C2) comprend les sous étapes suivantes :
C2.1') déplacement horizontal HNP de l'organe de commande 12, dans le même sens que celui de l'étape C1.2),
C2.2') déplacement horizontal H/PP de l'organe de commande 12, dans un sens opposé à celui de l'étape C2.1'),
C2.3') déplacement vertical V/PV de l'organe de commande 12.

L'enchaînement des étapes C2.1') à C2.3') est réalisé dans les conditions suivantes :
- on passe de l'étape C2.1') à l'étape C2.2') lorsque l'actionneur de sélection 16 détecte une butée, traduisant ainsi que l'organe de commande 12 a atteint le côté vertical 45,
- on passe de l'étape C2.2') à l'étape C2.3') lorsque l'organe de commande 12 a parcouru une distance prédéterminée,
- on interrompt l'étape C2.3') lorsque l'effort EP exercé par l'actionneur de passage 18 sur les moyens de liaison élastique associés 26 est supérieur à un seuil prédéterminé, traduisant ainsi que l'organe de commande 12 a atteint le côté convexe horizontal 57, la position de l'organe de commande 12 coïncidant alors avec celle d'un nouveau point initial pour l'étape C1.1).

Après détermination de la dernière butée de point mort (S12 dans l'exemple décrit), l'organe de commande 12 est repositionné sensiblement au milieu de la grille 14, c'est à dire sensiblement à la croisée du couloir de sélection CS et du deuxième couloir de passage CP₂.

De préférence, la sous-séquence C est suivie d'une étape de calcul permettant de vérifier que les positions des butées de point mort S5 à S12 sont cohérentes. Cette étape de calcul peut consister à vérifier que (voir figure 1) la droite Z1 passant par les deux butées de point mort délimitant le côté concave horizontal supérieur 40, 42 le plus bas est plus haute d'une hauteur non nulle H que la droite Z2 passant par les deux butées de point mort délimitant le côté concave horizontal inférieur 41, 43 le plus haut.

### Sous-séquence D (voir figure 7)

Cette sous-séquence D est destinée à s'assurer que l'on peut faire exécuter à l'organe de commande 12 une trajectoire rectiligne sur toute la longueur du couloir de sélection CS défini par les butées de point mort S5 à S12.

La sous-séquence D comprend de préférence les étapes de :
D1) à partir d'un point situé sensiblement au milieu du couloir de sélection, déplacement horizontal H/VP de l'organe de commande 12,
D2) déplacement horizontal H/VP de l'organe de commande 12, dans un sens opposé à celui de l'étape D1.

L'enchaînement des étapes D1) et D2) est réalisé dans les conditions suivantes :
- on passe de l'étape D1) à l'étape D2) lorsque l'actionneur de sélection 16 détecte une butée, traduisant ainsi que l'organe de commande 12 a atteint, à la fin de l'étape D1, un côté vertical ou concave incliné,
- on interrompt l'étape D2) lorsque l'actionneur de sélection 16 détecte une butée, traduisant ainsi que l'organe de commande 12 a atteint un côté vertical ou concave incliné opposé à celui de l'étape D1.

Le point à partir duquel est réalisé l'étape D1 est choisi par exemple sur une droite sensiblement parallèle à Z1 et Z2 et distante d'environ H/2 de ces deux droites Z1 et Z2 (voir figure 2).

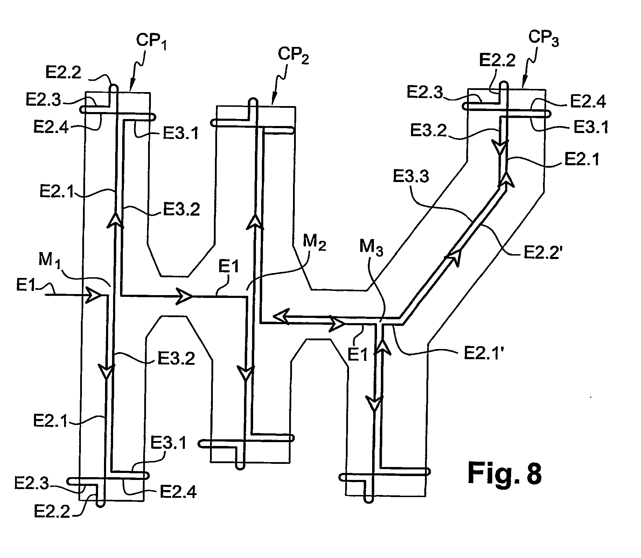

### Sous-séquence E (voir figure 8)

La sous-séquence E de localisation des butées de grille P1 à P18 comprend les étapes de :
E1) positionnement de l'organe de commande 12 sensiblement en un point Mᵢ milieu de l'intersection du couloir de sélection CS et d'un couloir de passage CPᵢ,
E2) détermination de la butée de passage P1 à P6 et des deux butées de sélection P7 à P18 d'un des deux demi-couloirs de passage supérieur ½CPᵢS et inférieur ½CPᵢI,
E3) retour de l'organe de commande 12 sensiblement au point milieu Mᵢ.

Les étapes E1) à E3) sont réalisées successivement. La succession des deux étapes E2) et E3) est réitérée jusqu'à détermination des butées de grille des deux extrémités d'un même couloir de passage CPᵢ, après quoi, l'étape E3) est suivie de l'étape E1) pour positionner l'organe de commande 12 sensiblement en un point Mᵢ₊₁ milieu de l'intersection du couloir de sélection CS et d'un couloir de passage CPᵢ₊₁.

L'étape E1) de positionnement de l'organe de commande 12 sensiblement au point milieu Mᵢ d'un couloir de passage CPᵢ comprend de préférence un déplacement horizontal H/PP de l'organe de commande 12 d'une distance prédéterminée.

L'étape E2) de détermination des butées de passage et de sélection comprend les sous-étapes suivantes :
E2.1) déplacement vertical V/PV de l'organe de commande 12,
E2.2) déplacement vertical V/PP de l'organe de commande 12, dans un sens opposé au déplacement de l'étape E2.1),
E2.3) déplacement horizontal HNP de l'organe de commande 12,
E2.4) déplacement horizontal H/VP de l'organe de commande 12, dans un sens opposé à celui de l'étape E2.3).

L'enchaînement des étapes E2.1) à E2.4) est réalisé dans les conditions suivantes :
- on passe de l'étape E2.1) à l'étape E2.2) lorsque l'effort EP exercé par l'actionneur de passage 18 sur les moyens de liaison élastique associés 26 est supérieur à un seuil prédéterminé, traduisant ainsi que l'organe de commande 12 a atteint un côté convexe horizontal, la position de l'organe de commande 12 coïncidant alors avec celle de la butée de passage P1 à P6 qui est ensuite mémorisée,
- on passe de l'étape E2.2) à l'étape E2.3) lorsque l'organe de commande 12 a parcouru une distance prédéterminée,
- on passe de l'étape E2.3) à l'étape E2.4) lorsque l'actionneur de sélection 16 détecte une butée, traduisant ainsi que l'organe de commande 12 a atteint, à la fin de l'étape E2.3), un côté vertical, la position de l'organe de commande 12 coïncidant alors avec celle d'une première butée de sélection P7 à P18 qui est ensuite mémorisée,
- on interrompt l'étape E2.4) lorsque l'actionneur de sélection 16 détecte une butée, traduisant ainsi que l'organe de commande 12 a atteint, à la fin de l'étape E2.4), un côté vertical opposé à celui de l'étape E2.4), la position de l'organe de commande 12 coïncidant alors avec celle de la seconde butée de sélection P7 à P18 qui est ensuite mémorisée.

On notera que l'étape E2) de détermination des butées de passage et de sélection du demi-couloir de passage supérieur ½CP₃S (passage du rapport de marche arrière) comprend de plus les sous-étapes suivantes précédant l'étape E2.1) :
E2.1') déplacement horizontal H/PP de l'organe de commande 12 d'une distance prédéterminée,
E2.2') déplacement oblique O/PP de l'organe de commande 12, d'une distance prédéterminée, par asservissement :
   □ en position de l'actionneur de sélection 16, et
   □ en position de l'actionneur de passage 18 par rapport à la position de l'actionneur de sélection 16.

L'étape E3) de retour de l'organe de commande 12 sensiblement au point milieu Mᵢ comprend les sous-étapes suivantes :
E3.1) déplacement horizontal H/PP de l'organe de commande 12, d'une distance prédéterminée, suivi du
E3.2) déplacement vertical V/PP de l'organe de commande 12, d'une distance prédéterminée.

On notera que l'étape E3) de retour de l'organe de commande 12 sensiblement au point milieu M₃ (après détermination des butées de passage P5 et de sélection P15, P16 du demi-couloir ½CP₃S de passage du rapport de marche arrière) comprend également la sous-étape suivante :
E3.3) déplacement oblique O/PP de l'organe de commande 12, d'une distance prédéterminée.

Le cas échéant, la sous-étape E3.3) est suivie d'un déplacement de l'organe de commande 12 pour le positionner sensiblement au milieu de la grille 14, c'est à dire sensiblement à la croisée du couloir de sélection CS et du deuxième couloir de passage CP₂.

On notera que l'invention n'est pas limitée au mode de réalisation précédemment décrit.

En particulier, le dispositif de commande selon l'invention peut ne comporter qu'un seul actionneur de passage ou de sélection de vitesse relié à l'organe de commande par des moyens élastiques.

## Revendications

1. Dispositif de commande de boîte de vitesses robotisée, du type comprenant :
- un organe de commande (12) guidé suivant des directions sensiblement perpendiculaires de sélection et de passage de vitesse définissant une grille de commande (14), et
- au moins un actionneur de sélection (16) ou de passage (18) de vitesse relié à l'organe de commande (12) par des moyens élastiques (24, 26),
**caractérisé en ce qu'**il comprend des moyens de détermination automatique de particularités géométriques de la grille de commande (14) comportant des moyens (36) de commande automatique d'une séquence de déplacements de l'organe de commande (12) susceptibles de piloter l'actionneur de sélection (16) ou de passage (18) par asservissement au moins à l'effort de compression exercé par l'actionneur de sélection (16) ou de passage (18) sur les moyens de liaison élastiques (24, 26).

2. Dispositif selon la revendication 1, **caractérisé en ce que** les moyens de commande automatique (36) sont également susceptibles de piloter l'actionneur de sélection (16) ou de passage (18) par asservissement à la position et/ou la vitesse de cet actionneur de sélection (16) ou de passage (18).

3. Dispositif selon la revendication 1 ou 2, **caractérisé en ce qu'**il comprend des moyens (28A, 30A, 28B, 30B) formant capteur choisis parmi :
- des moyens (28A, 30A, 28B, 30B) formant capteur de position de l'actionneur de sélection (16) ou de passage (18),
- des moyens (32, 34) formant capteur de vitesse de l'actionneur de sélection (16) ou de passage (18), et
- des moyens (28, 30) formant capteur d'effort de compression exercé par l'actionneur de sélection (16) ou de passage (18) sur les moyens de liaison élastiques (24, 26).

4. Dispositif selon l'une quelconque des revendications 1 à 3, **caractérisé en ce que** les particularités géométriques à déterminer comprennent des points singuliers d'un polygone concave délimitant la grille de commande (14) ou coïncidant avec cette grille aux emplacements de ces points singuliers, le polygone concave délimitant un couloir de sélection (CS) et des couloirs de passage (CPᵢ).

5. Dispositif selon la revendication 4, **caractérisé en ce que** les points singuliers comprennent des sommets de côtés concaves horizontaux, ces sommets étant appelés butées de point mort (S5 à S12).

6. Dispositif selon la revendication 4 ou 5, **caractérisé en ce que** chaque couloir de passage (18) comprend au moins une extrémité de passage d'un rapport, les points singuliers comprenant, pour chaque extrémité de passage d'un rapport, un point, dit butée de passage (P1 à P6), situé sur un côté convexe horizontal délimitant cette extrémité et deux points, dits butées de sélection (P7 à P18), situés respectivement sur deux côtés verticaux, adjacents au côté convexe horizontal, ces butées de passage (P1 à P6) et de sélection (P7 à P18) étant encore appelés butées de grille.

7. Dispositif selon l'une quelconque des revendications précédente, **caractérisé en ce qu'**il comprend deux actionneurs, respectivement de sélection (16) et de passage (18) de vitesse, reliés chacun à l'organe de commande (12) par des moyens élastiques (24, 26).

8. Procédé de détermination automatique de particularités géométriques de la grille de commande (14) d'un dispositif selon l'une quelconque des revendications précédentes, **caractérisé en ce que** l'on détermine chaque particularité par réalisation automatique d'une séquence de déplacements de l'organe de commande (12) au cours de laquelle l'actionneur de sélection (16) ou de passage (18) est piloté, au moins pour un déplacement de cette séquence, par asservissement à l'effort de compression exercé par l'actionneur de sélection (16) ou de passage (18) sur les moyens de liaison élastiques (24, 26).

9. Procédé selon la revendication 8 pour la détermination automatique de particularités géométriques de la grille de commande (14) d'un dispositif selon les revendications 2 et 7 prises ensemble, les moyens de commande automatique (36) étant susceptibles de piloter les actionneurs de sélection (16) et de passage (18) par asservissement de chacun de ces actionneurs à un paramètre choisi parmi l'effort de compression, la position et la vitesse de cet actionneur, **caractérisé en ce que** la séquence de déplacements de l'organe de commande (12) comporte une sous-séquence au cours de laquelle on réalise :
- un déplacement par rainurage R de l'organe de commande (12), c'est à dire en appui contre un côté vertical ou concave incliné du polygone, par asservissement :
■ en compression de l'actionneur de sélection (16), et
■ en vitesse de l'actionneur de passage (18).

10. Procédé selon la revendication 9, **caractérisé en ce que**, au cours de la sous-séquence, on réalise au moins un autre déplacement choisi parmi :
- un déplacement vertical V/PP de l'organe de commande (12), par asservissement en position des actionneurs de sélection (16) et de passage (18),
- un déplacement vertical V/PV de l'organe de commande (12), par asservissement :
■ en position de l'actionneur de sélection (16), et
■ en vitesse puis compression de l'actionneur de passage (18),
- un déplacement horizontal H/PP de l'organe de commande (12), par asservissement en position des actionneurs de sélection (16) et de passage (18),
- un déplacement horizontal H/VP de l'organe de commande (12), par asservissement :
■ en vitesse de l'actionneur de sélection (16), et
■ en position de l'actionneur de passage (18).

11. Procédé selon l'une quelconque des revendications 8 à 10 pour la détermination automatique de particularités géométriques de la grille de commande (14) d'un dispositif selon la revendication 3, **caractérisé en ce que** la séquence de déplacements de l'organe de commande (12) comporte une sous-séquence A au cours de laquelle on étalonne les moyens (28, 32) formant capteur.

12. Procédé selon l'une quelconque des revendications 8 à 11, **caractérisé en ce que** la séquence de déplacements de l'organe de commande (12) comporte une sous-séquence B de localisation d'un point prédéterminé, dit point d'origine (S3), choisi parmi les quatre coins (S1 à S3) du polygone.

13. Procédé selon l'une quelconque des revendications 8 à 12 pour la détermination automatique de particularités géométriques de la grille de commande (14) d'un dispositif selon la revendication 5, **caractérisé en ce que** la séquence de déplacements de l'organe de commande (12) comporte une sous-séquence C de localisation des butées de point mort (S5 à S12).

14. Procédé selon la revendication 13, **caractérisé en ce que** la sous-séquence C de localisation des butées de point mort (S5 à S12) comprend les étapes de :
C1) localisation d'une butée de point mort (S5 à S12),
C2) repositionnement de l'organe de commande (12) pour la localisation subséquente d'une autre butée de point mort (S5 à S12).

15. Procédé selon la revendication 13 ou 14, **caractérisé en ce que** la séquence de déplacements de l'organe de commande (12) comporte une sous-séquence D de vérification de la possibilité d'exécution d'une trajectoire rectiligne de l'organe de commande (12) sur toute la longueur du couloir de sélection (CS) défini par les butées de point mort (S5 à S12).

16. Procédé l'une quelconque des revendications 8 à 15 pour la détermination automatique de particularités géométriques de la grille de commande (14) d'un dispositif selon la revendication 6, **caractérisé en ce que** la séquence de déplacements de l'organe de commande (12) comporte une sous-séquence E de localisation des butées de grille (P1 à P18).

17. Procédé selon la revendication 16, chaque couloir de passage (CPᵢ) de la grille de commande (14) comprenant deux demi-couloirs de passage respectivement supérieur (½CPᵢS) et inférieur (½CPᵢI), **caractérisé en ce que** la sous-séquence E de localisation des butées de grille (P1 à P18) comprend les étapes de :
E1) positionnement de l'organe de commande (12) sensiblement en un point Mᵢ milieu de l'intersection du couloir de sélection (CS) et d'un couloir de passage (CPᵢ),
E2) détermination de la butée de passage (P1 à P6) et des deux butées de sélection (P7 à P18) d'un des deux demi-couloirs de passage supérieur (½CPᵢS) et inférieur (½CPᵢI),
E3) retour de l'organe de commande (12) sensiblement au point milieu Mᵢ,
les étapes E1) à E3) étant réalisées successivement, la succession des deux étapes E2) et E3) étant réitérée jusqu'à détermination des butées de grille (P1 à P18) des deux extrémités d'un même couloir de passage (CPᵢ), après quoi, l'étape E3) est suivie de l'étape E1) pour positionner l'organe de commande (12) sensiblement en un point Mᵢ₊₁ milieu de l'intersection du couloir de sélection (CS) et d'un couloir de passage (CPᵢ₊₁).

18. Procédé selon les revendications 10 et 12 prises ensemble, **caractérisé en ce que** la sous-séquence B de localisation du point d'origine (S3) comprend les étapes de:
B1) déplacement vertical V/PV de l'organe de commande (12),
B2) déplacement vertical V/PP de l'organe de commande (12), dans un sens opposé au déplacement de l'étape B1),
B3) déplacement horizontal HNP de l'organe de commande (12), vers le point d'origine,
B4) déplacement par rainurage R de l'organe de commande (12), dans un sens opposé au sens de l'étape B1),
B5) déplacement par rainurage R de l'organe de commande (12), dans le même sens que celui de l'étape B1),
l'enchaînement des étapes B1) à B5) étant réalisé dans les conditions suivantes :
- la sous-séquence B commence par l'étape B1) et se termine par l'étape B5),
- on passe de l'étape B1) à l'étape B2) lorsque l'effort EP exercé par l'actionneur de passage (18) sur les moyens de liaison élastique associés (26) est supérieur à un seuil prédéterminé, traduisant ainsi que l'organe de commande (12) a atteint un côté convexe horizontal,
- on passe de l'étape B2) à l'étape B3) lorsque l'organe de commande (12) a parcouru une distance prédéterminée,
- on passe de l'étape B3) à l'étape B4) lorsque l'actionneur de sélection (16) détecte une butée, traduisant ainsi que l'organe de commande (12) a atteint un côté vertical ou concave incliné,
- on passe de l'étape B4) à l'étape B3) lorsque l'effort ES exercé par l'actionneur de sélection (16) sur les moyens de liaison élastique associés (24) est inférieur à un seuil prédéterminé,
- on passe de l'étape B4) à l'étape B5) lorsque l'actionneur de passage (18) détecte une butée, traduisant ainsi que l'organe de commande (12) a atteint, à la fin de l'étape B4), un côté convexe horizontal,
- on interrompt l'étape B5) lorsque l'actionneur de passage (18) détecte une butée, traduisant ainsi que l'organe de commande (12) a atteint, à la fin de l'étape B5), un côté convexe horizontal opposé à celui de l'étape B4), la position de l'organe de commande (12) coïncidant alors avec celle du point d'origine qui est ensuite mémorisée.

19. Procédé selon les revendications 10 et 14 prises ensemble, **caractérisé en ce que** l'étape C1) de localisation d'une butée de point mort (S5 à S12) comprend les sous étapes suivantes :
C1.1) à partir d'un point initial, déplacement vertical V/PP de l'organe de commande (12),
C1.2) déplacement horizontal H/VP de l'organe de commande (12),
C1.3) déplacement par rainurage R de l'organe de commande (12), dans le même sens que celui de l'étape C1.1),
l'enchaînement des étapes C1.1) à C1.3) étant réalisé dans les conditions suivantes :
- on passe de l'étape C1.1) à l'étape C1.2) lorsque l'organe de commande (12) a parcouru une distance prédéterminée,
- on passe de l'étape C1.2) à l'étape C1.3) lorsque l'actionneur de sélection (16) détecte une butée, traduisant ainsi que l'organe de commande (12) a atteint un côté vertical ou concave incliné,
- on interrompt l'étape C1.3) lorsque l'effort ES exercé par l'actionneur de sélection (16) sur les moyens de liaison élastique associés (24) est inférieur à un seuil prédéterminé, la position de l'organe de commande (12) coïncidant avec le passage de ce seuil correspondant à celle d'une butée de point mort (S5 à S12) dont la position est alors mémorisée.

20. Procédé selon les revendications 12 et 19 prises ensemble, **caractérisé en ce que** l'on exécute pour la première fois l'étape C1.1) à partir du point d'origine.

21. Procédé selon les revendications 10 et 14 prises ensemble, **caractérisé en ce que** l'étape C2) de repositionnement de l'organe de commande (12) pour la localisation subséquente d'une autre butée de point mort (S5 à S12) comprend les sous étapes suivantes :
C2.1) déplacement horizontal H/PP de l'organe de commande (12), dans le même sens que celui de l'étape C1.2),
C2.2) déplacement vertical V/PV de l'organe de commande (12),
l'enchaînement des étapes C2.1) et C2.2) étant réalisé dans les conditions suivantes :
- on passe de l'étape C2.1) à l'étape C2.2) lorsque l'organe de commande (12) a parcouru une distance prédéterminée,
- on interrompt l'étape C2.2) lorsque l'effort EP exercé par l'actionneur de passage (18) sur les moyens de liaison élastique associés (26) est supérieur à un seuil prédéterminé, traduisant ainsi que l'organe de commande (12) a atteint un côté convexe horizontal, la position de l'organe de commande (12) coïncidant alors avec celle d'un nouveau point initial pour l'étape C1.1).

22. Procédé selon les revendications 10 et 14 prises ensemble, **caractérisé en ce que** l'étape C2) de repositionnement de l'organe de commande (12) pour la localisation subséquente d'une autre butée de point mort (S5 à S12) comprend les sous étapes suivantes :
C2.1') déplacement horizontal HNP de l'organe de commande (12), dans le même sens que celui de l'étape C1.2),
C2.2') déplacement horizontal H/PP de l'organe de commande (12), dans un sens opposé à celui de l'étape C2.1'),
C2.3') déplacement vertical V/PV de l'organe de commande (12),
l'enchaînement des étapes C2.1') à C2.3') étant réalisé dans les conditions suivantes :
- on passe de l'étape C2.1') à l'étape C2.2') lorsque l'actionneur de sélection (16) détecte une butée, traduisant ainsi que l'organe de commande (12) a atteint un côté vertical,
- on passe de l'étape C2.2') à l'étape C2.3') lorsque l'organe de commande (12) a parcouru une distance prédéterminée,
- on interrompt l'étape C2.3') lorsque l'effort EP exercé par l'actionneur de passage (18) sur les moyens de liaison élastique associés (26) est supérieur à un seuil prédéterminé, traduisant ainsi que l'organe de commande (12) a atteint un côté convexe horizontal, la position de l'organe de commande (12) coïncidant alors avec celle d'un nouveau point initial pour l'étape C1.1).

23. Procédé selon les revendications 10 et 15 prises ensemble, **caractérisé en ce que** la sous-séquence D de vérification de la possibilité d'exécution d'une trajectoire rectiligne de l'organe de commande (12) sur toute la longueur du couloir de sélection (CS) défini par les butées de point mort (S5 à S12) comprend les étapes de :
D1) à partir d'un point situé sensiblement au milieu du couloir de sélection (CS), déplacement horizontal H/VP de l'organe de commande (12),
D2) déplacement horizontal H/VP de l'organe de commande (12), dans un sens opposé à celui de l'étape D1,
l'enchaînement des étapes D1) et D2) étant réalisé dans les conditions suivantes :
- on passe de l'étape D1) à l'étape D2) lorsque l'actionneur de sélection (16) détecte une butée, traduisant ainsi que l'organe de commande (12) a atteint, à la fin de l'étape D1, un côté vertical ou concave incliné,
- on interrompt l'étape D2) lorsque l'actionneur de sélection (16) détecte une butée, traduisant ainsi que l'organe de commande (12) a atteint un côté vertical ou concave incliné opposé à celui de l'étape D1.

24. Procédé selon les revendications 10 et 17 prises ensemble, **caractérisé en ce que** l'étape E1) de positionnement de l'organe de commande (12) sensiblement au point milieu Mᵢ d'un couloir de passage (CPᵢ) comprend un déplacement horizontal H/PP de l'organe de commande (12) d'une distance prédéterminée.

25. Procédé selon les revendications 10 et 17 prises ensemble, **caractérisé en ce que** l'étape E2) de détermination des butées de passage (P1 à P6) et de sélection (P7 à P18) comprend les sous-étapes suivantes :
E2.1) déplacement vertical V/PV de l'organe de commande (12),
E2.2) déplacement vertical V/PP de l'organe de commande (12), dans un sens opposé au déplacement de l'étape E2.1),
E2.3) déplacement horizontal H/VP de l'organe de commande (12),
E2.4) déplacement horizontal H/VP de l'organe de commande (12), dans un sens opposé à celui de l'étape E2.3),
l'enchaînement des étapes E2.1) à E2.4) étant réalisé dans les conditions suivantes :
- on passe de l'étape E2.1) à l'étape E2.2) lorsque l'effort EP exercé par l'actionneur de passage (18) sur les moyens de liaison élastique associés (26) est supérieur à un seuil prédéterminé, traduisant ainsi que l'organe de commande (12) a atteint un côté convexe horizontal, la position de l'organe de commande (12) coïncidant alors avec celle de la butée de passage (P1 à P6) qui est ensuite mémorisée,
- on passe de l'étape E2.2) à l'étape E2.3) lorsque l'organe de commande (12) a parcouru une distance prédéterminée,
- on passe de l'étape E2.3) à l'étape E2.4) lorsque l'actionneur de sélection (16) détecte une butée, traduisant ainsi que l'organe de commande (12) a atteint, à la fin de l'étape E2.3), un côté vertical, la position de l'organe de commande (12) coïncidant alors avec celle d'une première butée de sélection (P7 à P18) qui est ensuite mémorisée,
- on interrompt l'étape E2.4) lorsque l'actionneur de sélection (16) détecte une butée, traduisant ainsi que l'organe de commande (12) a atteint, à la fin de l'étape E2.4), un côté vertical opposé à celui de l'étape E2.4), la position de l'organe de commande (12) coïncidant alors avec celle de la seconde butée de sélection (P7 à P18) qui est ensuite mémorisée.

26. Procédé selon la revendication 25, **caractérisé en ce que** l'étape E2) de détermination des butées de passage (P1 à P6) (18) et de sélection (16) comprend les sous-étapes suivantes précédant l'étape E2.1) :
E2.1') déplacement horizontal H/PP de l'organe de commande (12) d'une distance prédéterminée,
E2.2') déplacement oblique O/PP de l'organe de commande (12), d'une distance prédéterminée, par asservissement :
■ en position de l'actionneur de sélection (16), et
■ en position de l'actionneur de passage (18), par rapport à la position de l'actionneur de sélection (16).

27. Procédé selon les revendications 10 et 17 prises ensemble, **caractérisé en ce que** l'étape E3) de retour de l'organe de commande (12) sensiblement au point milieu Mᵢ comprend les sous-étapes suivantes :
E3.1) déplacement horizontal H/PP de l'organe de commande (12), d'une distance prédéterminée, suivi du
E3.2) déplacement vertical V/PP de l'organe de commande (12), d'une distance prédéterminée.

28. Procédé selon les revendications 10, 17 et 25 prises ensemble, **caractérisé en ce que** l'étape E3) de retour de l'organe de commande (12) sensiblement au point milieu Mᵢ comprend également la sous-étape suivante :
E3.3) déplacement oblique O/PP de l'organe de commande (12), d'une distance prédéterminée.

## Claims

1. A control apparatus for an automatic gearbox, of the type comprising:
- a control member (12) which is guided in a selection direction and a speed shift direction, these directions being at right angles to each other and the control member defining a control grid (14), and
- at least one selection actuator (16) or speed shift actuator (18), coupled to the control member (12) by elastic means (24, 26),
**characterised in that** it includes means for automatic determination of particular geometrical features of the control grid (14), comprising means (36) for the automatic control of a sequence of displacements of the control member (12), which are adapted to govern the selection actuator (16) or shift actuator (18) by being responsive at least to the compression force exerted by the selection actuator (16) or shift actuator (18) on the elastic coupling means (24, 26).

2. Apparatus according to Claim 1, **characterised in that** the automatic control means (36) are also adapted to govern the selection actuator (16) or shift actuator (18) by being responsive to the position and/or the speed of the said selection actuator (16) or shift actuator (18).

3. Apparatus according to Claim 1 or Claim 2, **characterised in that** it includes sensor means (28A, 30A, 28B, 30B) selected from the following:
- means (28A, 30A, 28B, 30B) for sensing the position of the selection actuator (16) or shift actuator (18),
- means (32, 34) for sensing the speed of the selection actuator (16) or shift actuator (18), and
- means (28, 30) for sensing the compressive force exerted by the selection actuator (16) or shift actuator (18) on the elastic coupling means (24, 26).

4. Apparatus according to any one of Claims 1 to 3, **characterised in that** the particular geometrical features to be determined include singular points of a concave polygon delimiting the control grid (14) or coincident with the said grid at the locations of the said singular points, the concave polygon delimiting a selection path (CS) and shift paths (CPᵢ).

5. Apparatus according to Claim 4, **characterised in that** the singular points include the summit points of horizontal concave sides, the said end points being called neutral stop points (S5 to S12).

6. Apparatus according to Claim 4 or Claim 5, **characterised in that** each shift path (18) includes at least one end point of a gear ratio shift, the singular points including, for each end point of a gear ratio shift, a point called a shift stop point (P1 to P6), which is situated on a horizontal convex side delimiting the said end point, and two points which are called selection stop points (P7 to P18) and which are situated respectively on two vertical sides adjacent to the horizontal convex side, the said shift stop points (P1 to P6) and selection stop points (P7 to P18) being also referred to as grid stop points.

7. Apparatus according to any one of the preceding Claims, **characterised in that** it includes two actuators, namely a selection actuator (16) and a speed shift actuator (18) respectively, each of which is coupled to the control member (12) by elastic means (24, 26).

8. A method for the automatic determination of particular geometrical features of the control grid (14) of an apparatus according to any one of the preceding Claims, **characterised in that** each particular feature is determined by the automatic generation of a sequence of displacements of the control member (12), in the course of which the selection actuator (16) or shift actuator (18) is governed, for at least one displacement in the said sequence, by being responsive to the compressive force exerted by the selection actuator (16) or shift actuator (18) on the resilient coupling means (24, 26).

9. A method according to Claim 8 for the automatic determination of particular geometrical features of the control grid (14) in an apparatus according to Claims 2 and 7 taken together, the automatic control means (36) being adapted to govern the selection actuator (16) and shift actuator (18) by virtue of the fact that each of the said actuators is responsive to a parameter selected from the compressive force, the position and the speed of the said actuator, **characterised in that** the sequence of displacements of the control member (12) includes a sub-sequence in the course of which the following are caused to take place:
- a displacement of the control member (12) by guide means R, that is to say in engagement against a vertical or inclined concave side of the polygon, in response to:
- the compression in the selection actuator (16), and
- the speed of the shift actuator (18).

10. A method according to Claim 9, **characterised in that**, in the course of the sub-sequence, at least one further displacement is performed, selected from the following:
- a vertical displacement V/PP of the control member (12), in response to the position of the selection actuator (16) and shift actuator (18), or
- a vertical displacement V/PV of the control member (12) in response to:
- the position of the selection actuator (16), and
- speed and then the compression of the shift actuator (18), or
- a horizontal displacement H/PP of the control member (12) in response to the position of the selection actuator (16) and shift actuator (18), or
- a horizontal displacement HNP of the control member (12) in response to:
- the speed of the selection actuator (16), and
- the position of the shift actuator (18).

11. A method according to any one of Claims 8 to 10 for the automatic determination of particular geometrical features of the control grid (14) in an apparatus according to Claim 3, **characterised in that** the sequence of displacements of the control member (12) includes a sub-sequence A, in the course of which the sensor means (28, 32) are calibrated.

12. A method according to any one of Claims 8 to 11, **characterised in that** the sequence of displacements of the control member (12) includes a sub-sequence B for location of a predetermined point, referred to as the point of origin (S3), which is selected from the four corners (S1 to S3) of the polygon.

13. A method according to any one of Claims 8 to 12 for the automatic determination of particular geometrical features of the control grid (14) in an apparatus according to Claim 5, **characterised in that** the sequence of displacements of the control member (12) includes a sub-sequence C for location of the neutral stop points (S5 to S12).

14. A method according to Claim 13, **characterised in that** the sub-sequence C for locating of the neutral stop points (S5 to S12) includes the steps of:
- (C1) locating one neutral stop point (S5 to S12), and
- (C2) repositioning the control member (12) for subsequently locating of a further neutral stop point (S5 to S12).

15. A method according to Claim 13 or Claim 14, **characterised in that** the sequence of displacements of the control member (12) includes a sub-sequence D for verifying the possibility that the control member (12) might follow a straight line trajectory over the whole length of the selection path (CS) defined by the neutral stop points (S5 to S12).

16. A method according to any one of Claims 8 to 15 for the automatic determination of particular geometrical features of the control grid (14) in an apparatus according to Claim 6, **characterised in that** the sequence of displacements of the control member (12) includes a sub-sequence E for locating the grid stop points (P1 to P18).

17. A method according to Claim 16, wherein each shift path (CP₁) of the control grid (14) comprises two half shift paths, namely an upper half shift path (1/2CPᵢS) and a lower half shift path (1/2CPᵢl), **characterised in that** the sub-sequence E for locating the grid stop points (P1 to P18) includes the steps of:
- (E1) positioning the control member (12) substantially at a mid point Mᵢ of the intersection of the selection path (CS) and a shift path (CPᵢ),
- (E2) determining the shift stop point (P1 to P6) and the two selection stop points (P7 to P18) in one of the two half shift paths, namely the upper (1/2CPᵢS) path and the lower (1/2CPᵢI) path, and
- (E3) returning the control member(12) substantially to the mid point Mᵢ,
steps E1 to E3 being performed successively, the succession of the two steps E2 and E3 being reiterated until determination is obtained of the grid stop points (P1 to P18) at the two ends of a common shift path (CPᵢ), after which step E3 is followed by step E1 in order to position the control member (12) substantially at a mid point Mᵢ₊₁ of the intersection of the selection path (CS) and a shift path (CPᵢ₊₁).

18. A method according to Claims 10 and 12 taken together, **characterised in that** the sub-sequence B for locating the point of origin (S3) comprises the steps of:
- (B1) vertical displacement V/PV of the control member (12),
- (B2) vertical displacement V/PP of the control member (12) in a direction opposite to the displacement in step B1,
- (B3) horizontal displacement H/VP of the control member (12) towards the point of origin,
- (B4) displacement, with guide means R, of the control member (12) in a direction opposite to the direction of step B1, and
- (B5) displacement, with guide means R, of the control member (12) in the same direction as that in step B1,
the sequence of steps B1 to B5 being performed under the following conditions:
- sub-sequence B starts with step B1 and ends with step B5,
- it passes from step B1 to step B2 when the force EP exerted by the shift actuator (18) on the associated elastic coupling means (26) is above a predetermined threshold value, thereby indicating that the control member (12) has reached a horizontal convex side,
- it passes from step B2 to B3 when the control member (12) has traversed a predetermined distance,
- it passes from step B3 to B4 when the selection actuator (16) detects a stop point, whereby indicating that the control member (12) has reached an inclined vertical or concave side,
- it passes from step B4 to step B3 when the force ES exerted by the selection actuator (16) on the associated elastic coupling means (24) is below a predetermined threshold value,
- it passes from step B4 to B5 when the shift actuator (18) detects a stop point, thereby indicating that the control member (12) has reached a horizontal convex side at the end of step B4, and
- step B5 is interrupted when the shift actuator (18) detects a stop point, thereby indicating that the control member (12) has reached, at the end of step B5, a horizontal convex side opposite to that in step B4, the position of the control member (12) then being coincident with that of the point of origin which is then memorised.

19. A method according to Claims 10 and 14 taken together, **characterised in that** step C1 of locating a neutral stop point (S5 to S12) comprises the following sub-steps:
- (C1.1) starting from an initial point, vertical displacement V/PP of the control member (12),
- (C1.2) horizontal displacement HNP of the control member (12), and
- (C1.3) displacement, with guide means R, of the control member (12) in the same direction as that in step C1.1,
the sequence of the steps C1.1 to C1.3 being carried out under the following conditions:
- the sequence passes from step C1.1 to step C1.2 when the control member (12) has traversed a predetermined distance,
- the sequence passes from step C1.2 to step C1.3 when the selection actuator (16) detects a stop point, thereby indicating that the control member (12) has reached an inclined vertical or concave side,
- step C1.3 is interrupted when the force ES exerted by the selection actuator (16) on the associated elastic coupling means (24) is below a predetermined threshold value, the position of the control member (12) being coincident with the point at which the said threshold value is passed through, corresponding to that of a neutral stop point (S5 to S12), the position of which is then memorised.

20. A method according to Claims 12 and 19 taken together, **characterised in that** step C1.1 is performed for the first time starting from the point of origin.

21. A method according to Claims 10 and 14 taken together, **characterised in that** step C2, for repositioning the control member (12) for the subsequent location of a further neutral stop point (S5 to S12) comprises the following sub-steps:
- (C2.1) horizontal displacement H/PP of the control member (12) in the same direction as that in step C1.2, and
- (C2.2) vertical displacement V/PV of the control member (12),
the sequence of steps C2.1 and 2.2 being performed under the following conditions:
- the sequence passes from step C2.1 to step C2.2 when the control member (12) has traversed a predetermined distance, and
- step C2..2 is interrupted when the force EP exerted by the shift actuator (18) on the associated elastic coupling means (26) exceeds a predetermined threshold value, thereby indicating that the control member (12) has reached a horizontal convex side, the position of the control member (12) then being coincident with that of a new starting point for step C1.1.

22. A method according to Claims 10 and 14 taken together, **characterised in that** step C2 of repositioning the control member (12) for the subsequent localisation of a further neutral stop point (S5 to S12) comprises the following sub-steps:
- (C2.1') horizontal displacement HNP of the control member (12) in the same direction as that in step C1.2,
- (C2.2') horizontal displacement H/PP of the control member (12) in a direction opposite to that in step C2.1', and
- (C2.3') vertical displacement V/PV of the control member (12),
the sequence of the steps C2.1' to C2.3' being carried out under the following conditions:
- the sequence passes from step C2.1' to step C2.2' when the selection actuator (16) detects a stop point, thereby indicating that the control member (12) has reached a vertical side,
- the sequence passes from step C2.2' to step C2.3' when the control member (12) has traversed a predetermined distance, and
- step C2.3' is interrupted when the force EP exerted by the shift actuator (18) on the associated elastic coupling means (26) exceeds a predetermined threshold value, thereby indicating that the control member (12) has reached a horizontal convex side, the position of the control member (12) then being coincident with that of a new starting point for step C1.1.

23. A method according to Claims 10 and 15 taken together, **characterised in that** the sub-sequence D, for verification of the possibility that the control member (12) may follow a straight trajectory over the whole length of the selection path (CS) defined by the neutral stop points (S5 to S12), comprises the steps of:
- (D1) horizontal displacement HNP of the control member (12) from a point which is situated substantially in the middle of the selection path (CS), and
- (D2) horizontal displacement HNP of the control member (12) in a direction opposite to that in step D1,
the sequence of the steps D1 and D2 being carried out under the following conditions:
- the sequence passes from step D1 to step D2 when the selection actuator (16) detects a stop point, thereby indicating that the control member (12) has reached a vertical side or an inclined concave side at the end of step D1, and
- step D2 is interrupted when the selection actuator (16) detects a stop point, thereby indicating that the control member (12) has reached a vertical side or an inclined concave side opposite to that in step D1.

24. A method according to Claims 10 and 17 taken together, **characterised in that** step E1 for positioning the control member (12) substantially at the mid point Mᵢ of a shift path (CPᵢ) comprises a horizontal displacement H/PP of the control member (12) through a predetermined distance.

25. A method according to Claims 10 and 17 taken together, **characterised in that** step E2 of determining the shift stop points (P1 to P6) and the selection stop points (P7 to P18) comprises the following sub-steps:
- (E2.1) vertical displacement V/PV of the control member (12),
- (E2.2) vertical displacement V/PP of the control member (12) in a direction opposite to the displacement in step E2.1,
- (E2.3) horizontal displacement HNP of the control member (12), and
- (E2.4) horizontal displacement HNP of the control member (12) in a direction opposite to that in step E2.3,
the sequence of the steps E2.1 to E2.4 being carried out under the following conditions:
- the sequence passes from step E2.1 to step E2.2 when the force EP exerted by the shift actuator (18) on the associated elastic coupling means (26) exceeds a predetermined threshold value, thereby indicating that the control member (12) has reached a horizontal convex side, the position of the control member (12) then being coincident with that of the shift stop point (P1 to P6) which is then memorised,
- the sequence passes from step E2.2 to step E2.3 when the control member (12) has traversed a predetermined distance,
- the sequence passes from step E2.3 to E2.4 when the selection actuator (16) detects a stop point, thereby indicating that the control member (12) has reached a vertical side at the end of step E2.3, the position of the control member (12) then being coincident with that of a first selection stop point (P7 to P18), which is then memorised, and
- step E2.4 is interrupted when the selection actuator (16) detects a stop point, thereby indicating that the control member (12) has reached, at the end of step E2.4, a vertical side opposite to that in step E2.4, the position of the control member (12) then being coincident with that of the second selection stop point (P7 to P18), which is then memorised..

26. A method according to Claim 25, **characterised in that** step E2, for determining the shift stop points (P1 to P6) (18) and of selection (16) *[sic]* comprises the following sub-steps prior to step E2.1:
- (E2.1') horizontal displacement H/PP of the control member (12) through a predetermined distance, and
- (E2.2') oblique displacement O/PP of the control member (12) through a predetermined distance, in response to:
- the position of the selection actuator (16), and
- the position of the shift actuator (18) with respect to the position of the selection actuator (16).

27. A method according to Claims 10 and 17 taken together, **characterised in that** step E3, for returning the control member (12) substantially to the mid point Mᵢ, comprises the following sub-steps:
- (E3.1) horizontal displacement H/PP of the control member (12) through a predetermined distance, followed by
- (E3.2) vertical displacement V/PP of the control member (12) through a predetermined distance.

28. A method according to Claims 10, 17 and 25 taken together, **characterised in that** step E3, for returning the control member (12) substantially to the mid point Mᵢ, further comprises the following sub-step:
- (E3.3) oblique displacement O/PP of the control member (12) through a predetermined distance.

## Patentansprüche

1. Vorrichtung zur Steuerung eines vollautomatischen Schaltgetriebes, umfassend:
- ein Steuerorgan (12), das entlang in etwa senkrechten Gangwahl- und Gangwechselrichtungen geführt ist, die eine Schaltkulisse (14) definieren, und
- wenigstens eine Betätigungseinrichtung für die Gangwahl (16) oder den Gangwechsel (18), das durch elastische Mittel (24, 26) mit dem Steuerorgan (12) verbunden ist,
**dadurch gekennzeichnet, dass** sie Mittel zur automatischen Bestimmung von geometrischen Besonderheiten der Schaltkulisse (14) umfasst, mit Mitteln (36) zur automatischen Steuerung einer Verstellsequenz des Steuerorgans (12), die in der Lage sind, die Betätigungseinrichtung für die Gangwahl (16) oder den Gangwechsel (18) durch Regelung wenigstens nach der durch die Betätigungseinrichtung für die Gangwahl (16) oder den Gangwechsel (18) auf die elastischen Verbindungsmittel (24, 26) ausgeübten Druckbeanspruchung anzusteuern.

2. Vorrichtung nach Anspruch 1, **dadurch gekennzeichnet, dass** die automatischen Steuermittel (36) außerdem in der Lage sind, die Betätigungseinrichtung für die Gangwahl (16) oder den Gangwechsel (18) durch Regelung nach der Position und/oder der Geschwindigkeit dieser Betätigungseinrichtung für die Gangwahl (16) oder den Gangwechsel (18) anzusteuern.

3. Vorrichtung nach Anspruch 1 oder 2, **dadurch gekennzeichnet, dass** sie als Geber dienende Mittel (28A, 30A, 28B, 30B) umfasst, die ausgewählt sind aus:
- Mitteln (28A, 30A, 28B, 30B), die als Geber für die Position der Betätigungseinrichtung für die Gangwahl (16) oder den Gangwechsel (18) dienen,
- Mitteln (32, 34), die als Geber für die Geschwindigkeit der Betätigungseinrichtung für die Gangwahl (16) oder den Gangwechsel (18) dienen, und
- Mitteln (28, 30), die als Geber für die durch die Betätigungseinrichtung für die Gangwahl (16) oder den Gangwechsel (18) auf die elastischen Verbindungsmittel (24, 26) ausgeübte Druckbeanspruchung dienen.

4. Vorrichtung nach einem der Ansprüche 1 bis 3, **dadurch gekennzeichnet, dass** die zu bestimmenden geometrischen Besonderheiten einzelne Punkte eines konkaven Vielecks enthalten, das die Schaltkulisse (14) begrenzt oder mit dieser Schaltkulisse an den Stellen dieser einzelnen Punkte zusammenfällt, wobei das konkave Vieleck eine Gangwahlbahn (CS) und Gangwechselbahnen (CPᵢ) begrenzt.

5. Vorrichtung nach Anspruch 4, **dadurch gekennzeichnet, dass** die einzelnen Punkte Spitzen von horizontalen konkaven Seiten umfassen, wobei diese Spitzen als Leerlaufanschläge (S5 bis S12) bezeichnet werden.

6. Vorrichtung nach Anspruch 4 oder 5, **dadurch gekennzeichnet, dass** jede Gangwechselbahn (18) wenigstens ein Gangwechselende für einen Gang umfasst, wobei die einzelnen Punkte zu jedem Gangwechselende für einen Gang einen als Gangwechselanschlag (P1 bis P6) bezeichneten Punkt, der sich auf einer horizontalen konvexen Seite befindet, die dieses Ende begrenzt, und zwei als Gangwahlanschläge (P7 bis P18) bezeichnete Punkte umfassen, die sich auf zwei an der horizontalen konvexen Seite angrenzenden vertikalen Seiten befinden, wobei diese Gangwechsel-(P1 bis P6) und Gangwahlanschläge (P7 bis P18) auch als Schaltkulissenanschläge bezeichnet werden.

7. Vorrichtung nach einem der vorangehenden Ansprüche, **dadurch gekennzeichnet , dass** sie zwei Betätigungseinrichtungen, für die Gangwahl (16) bzw. für den Gangwechsel (18), umfasst, die jeweils durch elastische Mittel (24, 26) mit dem Steuerorgan (12) verbunden sind.

8. Verfahren zur automatischen Bestimmung von geometrischen Besonderheiten der Schaltkulisse (14) einer Vorrichtung nach einem der vorangehenden Ansprüche, **dadurch gekennzeichnet, dass** jede Besonderheit durch die automatische Durchführung einer Verstellsequenz des Steuerorgans (12) bestimmt wird, in deren-Verlauf die Betätigungseinrichtung für die Gangwahl (16) oder den Gangwechsel (18), wenigstens für eine Verstellung dieser Verstellsequenz, durch Regelung nach der durch die Betätigungseinrichtung für die Gangwahl (16) oder den Gangwechsel (18) auf die elastischen Verbindungsmittel (24, 26) ausgeübten Druckbeanspruchung angesteuert wird.

9. Verfahren nach Anspruch 8 zur automatischen Bestimmung von geometrischen Besonderheiten der Schaltkulisse (14) einer Vorrichtung nach den Ansprüchen 2 und 7 zusammengenommen, wobei die Mittel zur automatischen Steuerung (36) in der Lage sind, die Betätigungseinrichtungen für die Gangwahl (16) und den Gangwechsel (18) durch Regelung jeder dieser Betätigungseinrichtungen nach einem aus der Druckbeanspruchung, der Position und der Geschwindigkeit dieser Betätigungseinrichtung ausgewählten Parameter zu steuern, **dadurch gekennzeichnet , dass** die Verstellsequenz des Steuerorgans (12) eine Untersequenz umfasst, in deren Verlauf folgendes ausgeführt wird:
- eine Auskehlungsverstellung R des Steuerorgans (12), das heißt in Anlage an einer vertikalen oder geneigten konkaven Seite des Vielecks durch:
■ Druckregelung der Betätigungseinrichtung für die Gangwahl (16) und
■ Geschwindigkeitsregelung der Betätigungseinrichtung für den Gangwechsel (18).

10. Verfahren nach Anspruch 9, **dadurch gekennzeichnet, dass** im Verlauf der Untersequenz eine andere Verstellung stattfindet, die ausgewählt ist aus:
- einer vertikalen Verstellung V/PP des Steuerorgans (12) durch Positionsregelung der Betätigungseinrichtungen für die Gangwahl (16) und den Gangwechsel (18),
- einer vertikalen Verstellung V/PV des Steuerorgans (12) durch:
■ Positionsregelung der Betätigungseinrichtung für die Gangwahl (16) und
■ Geschwindigkeitsregelung der Betätigungseinrichtung für den Gangwechsel (18),
- einer horizontalen Verstellung H/PP des Steuerorgans (12) durch Positionsregelung der Betätigungseinrichtungen für die Gangwahl (16) und den Gangwechsel (18),
- einer horizontalen Verstellung H/VP des Steuerorgans (12) durch:
■ Geschwindigkeitsregelung der Betätigungseinrichtung für die Gangwahl (16) und
■ Positionsregelung der Betätigungseinrichtung für den Gangwechsel (18).

11. Verfahren nach einem der Ansprüche 8 bis 10 zur automatischen Bestimmung von geometrischen Besonderheiten der Schaltkulisse (14) einer Vorrichtung nach Anspruch 3, **dadurch gekennzeichnet, dass** die Verstellsequenz des Steuerorgans (12) eine Untersequenz A umfasst, in deren Verlauf die als Geber dienenden Mittel (28, 32) eingestellt werden.

12. Verfahren nach einem der Ansprüche 8 bis 11, **dadurch gekennzeichnet, dass** die Verstellsequenz des Steuerorgans (12) eine Untersequenz B zur Lokalisierung eines als Ausgangspunkt (S3) bezeichneten vorbestimmten Punktes umfasst, der aus den vier Ecken (S1 bis S3) des Vielecks ausgewählt ist.

13. Verfahren nach einem der Ansprüche 8 bis 12 zur automatischen Bestimmung von geometrischen Besonderheiten der Schaltkulisse (14) einer Vorrichtung nach Anspruch 5, **dadurch gekennzeichnet, dass** die Verstellsequenz des Steuerorgans (12) eine Untersequenz C zur Lokalisierung der Leerlaufanschläge (S5 bis S12) umfasst.

14. Verfahren nach Anspruch 13, **dadurch gekennzeichnet, dass** die Untersequenz C zur Lokalisierung der Leerlaufanschläge (S5 bis S12) folgende Schritte umfasst:
C1) Lokalisierung eines Leerlaufanschlags (S5 bis S12),
C2) Neupositionierung des Steuerorgans (12) für die nachfolgende Lokalisierung eines Leerlaufanschlags (S5 bis S12).

15. Verfahren nach Anspruch 13 oder 14, **dadurch gekennzeichnet , dass** die Verstellsequenz des Steuerorgans (12) eine Untersequenz D zur Überprüfung der Möglichkeit der Ausführung eines geradlinigen Verstellwegs des Stellorgans (12) auf der gesamten Länge der durch die Leerlaufanschläge (S5 bis S12) definierten Gangwahlbahn (CS) umfasst.

16. Verfahren nach einem der Ansprüche 8 bis 15 zur automatischen Bestimmung von geometrischen Besonderheiten der Schaltkulisse (14) einer Vorrichtung nach Anspruch 6, **dadurch gekennzeichnet, dass** die Verstellsequenz des Steuerorgans (12) eine Untersequenz E zur Lokalisierung der Schaltkulissenanschläge (P1 bis P18) umfasst.

17. Verfahren nach Anspruch 16, wobei jede Gangwahlbahn (CPᵢ) der Schaltkulisse (14) zwei Gangwahlhalbbahnen, eine obere Halbbahn (½CPᵢS) bzw. eine untere Halbbahn (½CPᵢI), umfasst, **dadurch gekennzeichnet , dass** die Untersequenz E zur Lokalisierung der Schaltkulissenanschläge (P1 bis P18) folgende Schritte umfasst:
E1) Positionierung des Steuerorgans (12) in etwa in einem Mittelpunkt Mᵢ der Schnittstelle der Gangwahlbahn (Cs) und einer Gangwechselbahn (CPᵢ),
E2) Bestimmung des Gangwechselanschlags (P1 bis P6) und der zwei Gangwahlanschläge (P7 bis P18) einer der zwei oberen (½CPᵢS) und unteren (½CPᵢI) Gangwechselhalbbahnen,
E3) Rückstellung des Steuerorgans (12) in etwa auf den Mittelpunkt Mᵢ,
wobei die Schritte E1) bis E3) nacheinander erfolgen, wobei die Abfolge der zwei Schritte E2) und E3) bis zur Bestimmung der Schaltkulissenanschläge (P1 bis P18) der beiden Enden ein und derselben Gangwechselbahn (CPᵢ) wiederholt wird, woraufhin auf Schritt E3) der Schritt E1) folgt, um das Steuerorgan (12) in etwa in einen Punkt Mᵢ₊₁ als Mittelpunkt der Schnittstelle der Gangwahlbahn (CS) und einer Gangwechselbahn (CPᵢ₊₁) zu positionieren.

18. Verfahren nach den Ansprüchen 10 und 12 zusammengenommen, **dadurch gekennzeichnet , dass** die Untersequenz B zur Lokalisierung des Ausgangspunktes (S3) folgende Schritte umfasst:
B1) vertikale Verstellung V/PV des Steuerorgans (12),
B2) vertikale Verstellung V/PP des Steuerorgans (12) in einer zur Verstellung von Schritt B1) entgegengesetzten Richtung,
B3) horizontale Verstellung H/VP des Steuerorgans (12) zum Ausgangspunkt,
B4) Auskehlungsverstellung R Steuerorgans (12) in einer zur Richtung von Schritt B1) entgegengesetzten Richtung,
B5) Auskehlungsverstellung R Steuerorgans (12) in der gleichen Richtung wie bei Schritt B1),
wobei die Aufeinanderfolge der Schritte B1) bis B5) unter den folgenden Bedingungen stattfindet:
- die Untersequenz B beginnt mit Schritt B1) und endet mit Schritt B5),
- der Übergang von Schritt B1) zu Schritt B2) erfolgt, wenn die durch die Betätigungseinrichtung für den Gangwechsel (18) auf die zugehörigen elastischen Verbindungsmittel (26) ausgeübte Beanspruchung EP größer als ein vorbestimmter Schwellenwert ausfällt, wodurch angezeigt wird, dass das Steuerorgan (12) eine horizontale konvexe Seite erreicht hat,
- der Übergang von Schritt B2) zu Schritt B3) erfolgt, wenn das Steuerorgan (12) einen vorbestimmten Abstand zurückgelegt hat,
- der Übergang von Schritt B3) zu Schritt B4) erfolgt, wenn die Betätigungseinrichtung für die Gangwahl (16) einen Anschlag erfasst, wodurch angezeigt wird, dass das Steuerorgan (12) eine vertikale oder geneigte konkave Seite erreicht hat,
- der Übergang von Schritt B4) zu Schritt B3) erfolgt, wenn die durch die Betätigungseinrichtung für die Gangwahl (16) auf die zugehörigen elastischen Verbindungsmittel (24) ausgeübte Beanspruchung ES kleiner als ein vorbestimmter Schwellenwert ausfällt,
- der Übergang von Schritt B4) zu Schritt B5) erfolgt, wenn die Betätigungseinrichtung für den Gangwechsel (18) einen Anschlag erfasst, wodurch angezeigt wird, dass das Steuerorgan (12) am Ende von Schritt B4) eine horizontale konvexe Seite erreicht hat,
- Schritt B5) wird abgebrochen, wenn die Betätigungseinrichtung für den Gangwechsel (18) einen Anschlag erfasst, wodurch angezeigt wird, dass das Steuerorgan (12) am Ende von Schritt B5) eine horizontale konvexe Seite gegenüber der von Schritt B4) erreicht hat, wobei die Position des Steuerorgans (12) dann mit der des Ausgangspunktes zusammenfällt, die anschließend abgespeichert wird.

19. Verfahren nach den Ansprüchen 10 und 14 zusammengenommen, **dadurch gekennzeichnet , dass** die Untersequenz C1) zur Lokalisierung eines Leerlaufanschlags (S5 bis S12) folgende Schritte umfasst:
C1.1) von einem Anfangspunkt aus vertikale Verstellung V/PP des Steuerorgans (12),
C1.2) horizontale Verstellung H/VP des Steuerorgans (12),
C1.3) Auskehlungsverstellung R Steuerorgans (12) in der gleichen Richtung wie bei Schritt C1.1),
wobei die Aufeinanderfolge der Schritte C1.1) bis C1.3) unter den folgenden Bedingungen stattfindet:
- der Übergang von Schritt C1.1) zu Schritt C1.2) erfolgt, wenn das Steuerorgan (12) einen vorbestimmten Abstand zurückgelegt hat,
- der Übergang von Schritt C1.2) zu Schritt C1.3) erfolgt, wenn die Betätigungseinrichtung für die Gangwahl (16) einen Anschlag erfasst, wodurch angezeigt wird, dass das Steuerorgan (12) eine vertikale oder geneigte konkave Seite erreicht hat,
- Schritt C1.3) wird abgebrochen, wenn die durch die Betätigungseinrichtung für die Gangwahl (16) auf die zugehörigen elastischen Mittel (24) ausgeübte Beanspruchung ES kleiner als ein vorbestimmter Schwellenwert ausfällt, wobei die Position des Steuerorgans (12), die mit der Überschreitung dieses Schwellenwertes zusammenfällt, der eines Leerlaufanschlags (S5 bis S12) entspricht, die dann abgespeichert wird.

20. Verfahren nach den Ansprüchen 12 und 19 zusammengenommen, **dadurch g**ekennzeichnet, dass Schritt C1.1) erstmals vom Ausgangspunkt aus ausgeführt wird.

21. Verfahren nach den Ansprüchen 10 und 14 zusammengenommen, **dadurch gekennzeichnet, dass** Schritt C2) zur Neupositionierung des Steuerorgans (12) für die anschließende Lokalisierung eines anderen Leerlaufanschlags (S5 bis S12) die folgenden Unterschritte umfasst:
C2.1) horizontale Verstellung H/PP des Steuerorgans (12) in der gleichen Richtung wie bei Schritt C1.2),
C2.2) vertikale Verstellung V/PV des Steuerorgans (12),
wobei die Aufeinanderfolge der Schritte C2.1) und C2.2) unter den folgenden Bedingungen stattfindet:
- der Übergang von Schritt C2.1) zu Schritt C2.2) erfolgt, wenn das Steuerorgan (12) einen vorbestimmten Abstand zurückgelegt hat,
- Schritt C2.2) wird abgebrochen, wenn die durch die Betätigungseinrichtung für den Gangwechsel (18) auf die zugehörigen elastischen Mittel (26) ausgeübte Beanspruchung EP größer als ein vorbestimmter Schwellenwert ausfällt, wodurch angezeigt wird, dass das Steuerorgan (12) eine horizontale konvexe Seite erreicht hat,
wobei die Position des Steuerorgans (12) dann mit der eines neuen Anfangspunktes für Schritt C1.1) zusammenfällt.

22. Verfahren nach den Ansprüchen 10 und 14 zusammengenommen, **dadurch gekennzeichnet, dass** Schritt C2) zur Neupositionierung des Steuerorgans (12) für die nachfolgende Lokalisierung eines anderen Leeraufanschlags (S5 bis S12) die folgenden Unterschritte umfasst:
C2.1') horizontale Verstellung H/VP des Steuerorgans (12) in der gleichen Richtung wie bei Schritt C1.2),
C2.2') horizontale Verstellung H/PP des Steuerorgans (12) in einer zur Richtung von Schritt C2.1') entgegengesetzten Richtung,
C2.3') vertikale Verstellung V/PV des Steuerorgans (12),
wobei die Aufeinanderfolge der Schritte C2.1') bis C2.3') unter den folgenden Bedingungen stattfindet:
- der Übergang von Schritt C2.1') zu Schritt C2.2') erfolgt, wenn das Steuerorgan (12) einen Anschlag erfasst, wodurch angezeigt wird, dass das Steuerorgan (12) eine vertikale Seite erreicht hat,
- der Übergang von Schritt C2.2') zu Schritt C2.3') erfolgt, wenn das Steuerorgan (12) einen vorbestimmten Abstand zurückgelegt hat,
- Schritt C2.3') wird abgebrochen, wenn die durch die Betätigungseinrichtung für den Gangwechsel (18) auf die zugehörigen elastischen Mittel (26) ausgeübte Beanspruchung EP größer als ein vorbestimmter Schwellenwert ausfällt, wodurch angezeigt wird, dass das Steuerorgan (12) eine horizontale konvexe Seite erreicht hat, wobei die Position des Steuerorgans (12) dann mit der eines neuen Anfangspunktes für Schritt C1.1) zusammenfällt.

23. Verfahren nach den Ansprüchen 10 und 15 zusammengenommen, **dadurch gekennzeichnet , dass** die Untersequenz D zur Überprüfung der Möglichkeit der Ausführung eines geradlinigen Verstellwegs des Stellorgans (12) auf der gesamten Länge der durch die Leerlaufanschläge (S5 bis S12) definierten Gangwahlbahn (CS) folgende Schritte umfasst:
D1) von einem in etwa in der Mitte der Gangwahlbahn (CS) befindlichen Punkt aus erfolgende horizontale Verstellung H/VP des Steuerorgans (12),
D2) horizontale Verstellung H/VP des Steuerorgans (12) in einer zur Richtung von Schritt D1 entgegengesetzten Richtung,
wobei die Aufeinanderfolge der Schritte D1) und D2) unter den folgenden Bedingungen stattfindet:
- der Übergang von Schritt D1) zu Schritt D2) erfolgt, wenn die Betätigungseinrichtung für die Gangwahl (16) einen Anschlag erfasst, wodurch angezeigt wird, dass das Steuerorgan (12) am Ende von Schritt D1 eine vertikale oder geneigte konkave Seite erreicht hat,
- Schritt D2) wird abgebrochen, wenn die Betätigungseinrichtung für die Gangwahl (16) einen Anschlag erfasst, wodurch angezeigt wird, dass das Steuerorgan (12) eine vertikale oder geneigte konkave Seite gegenüber der von Schritt D1 erreicht hat.

24. Verfahren nach den Ansprüchen 10 und 17 zusammengenommen, **dadurch gekennzeichnet , dass** Schritt E1) zur Positionierung des Steuerorgans (12) in etwa auf den Mittelpunkt Mᵢ einer Gangwechselbahn (CPᵢ) eine horizontale Verstellung H/PP des Steuerorgans (12) um einen vorbestimmten Abstand umfasst.

25. Verfahren nach den Ansprüchen 10 und 17 zusammengenommen, **dadurch gekennzeichnet , dass** Schritt E2) zur Bestimmung der Gangwechsel- (P1 bis P6) und Gangwahlanschläge (P7 bis P18) die folgenden Unterschritte umfasst:
E2.1) vertikale Verstellung V/PV des Steuerorgans (12),
E2.2) vertikale Verstellung V/PP des Steuerorgans (12) in einer zur Verstellung von Schritt E2.1) entgegengesetzten Richtung,
E2.3) horizontale Verstellung H/VP des Steuerorgans (12) ,
E2.4) horizontale Verstellung H/VP des Steuerorgans (12) in einer zur Richtung von Schritt E2.3) entgegengesetzten Richtung,
wobei die Aufeinanderfolge der Schritte E2.1) bis E2.4) unter den folgenden Bedingungen stattfindet:
- der Übergang von Schritt E2.1) zu Schritt E2.2) erfolgt, wenn die durch die Betätigungseinrichtung für den Gangwechsel (18) auf die zugehörigen elastischen Verbindungsmittel (26) ausgeübte Beanspruchung EP größer als ein vorbestimmter Schwellenwert ausfällt, wodurch angezeigt wird, dass das Steuerorgan (12) eine horizontale konvexe Seite erreicht hat, wobei die Position des Steuerorgans (12) dann mit der des Gangwechselanschlags (P1 bis P6) zusammenfällt, die anschließend abgespeichert wird,
- der Übergang von Schritt E2.2) zu Schritt E2.3) erfolgt, wenn das Steuerorgan (12) einen vorbestimmten Abstand zurückgelegt hat,
- der Übergang von Schritt E2.3) zu Schritt E2.4) erfolgt, wenn die Betätigungseinrichtung für die Gangwahl (16) einen Anschlag erfasst, wodurch angezeigt wird, dass das Steuerorgan (12) am Ende von Schritt E2.3) eine vertikale Seite erreicht hat, wobei die Position des Steuerorgans (12) dann mit der eines ersten Gangwahlanschlags (P7 bis P18) zusammenfällt, die anschließend abgespeichert wird,
- Schritt E2.4) wird abgebrochen, wenn die Betätigungseinrichtung für die Gangwahl (16) einen Anschlag erfasst, wodurch angezeigt wird, dass das Steuerorgan (12) am Ende von Schritt E2.4) eine vertikale Seite gegenüber der von Schritt E2.4) erreicht hat, wobei die Position des Steuerorgans (12) dann mit der des zweiten Gangwahlanschlags (P7 bis P18) zusammenfällt, die anschließend abgespeichert wird.

26. Verfahren nach Anspruch 25, **dadurch gekennzeichnet, dass** der Schritt E2) zur Bestimmung der Gangwechsel- (P1 bis P6) (18) und Gangwahlanschläge (16) die folgenden Unterschritte vor Schritt E2.1) umfasst:
E2.1') horizontale Verstellung H/PP des Steuerorgans (12) um einen vorbestimmten Abstand,
E2.2') Schrägverstellung O/PP des Steuerorgans (12) um einen vorbestimmten Abstand durch:
■ Positionsregelung der Betätigungseinrichtung für die Gangwahl (16) und
■ Positionsregelung der Betätigungseinrichtung für den Gangwechsel (18) bezogen auf die Position der Betätigungseinrichtung für die Gangwahl (16).

27. Verfahren nach den Ansprüchen 10 und 17 zusammengenommen, **dadurch gekennzeichnet, dass** Schritt E3) zur Rückstellung des Steuerorgans (12) in etwa auf den Mittelpunkt Mᵢ die folgenden Unterschritte umfasst:
E3.1) horizontale Verstellung H/PP des Steuerorgans (12) um einen vorbestimmten Abstand, gefolgt von der,
E3.2) vertikalen Verstellung V/PP des Steuerorgans (12) um einen vorbestimmten Abstand.

28. Verfahren nach den Ansprüchen 10, 17 und 25 zusammengenommen, **dadurch gekennzeichnet , dass** Schritt E3) zur Rückstellung des Steuerorgans (12) in etwa auf den Mittelpunkt Mᵢ außerdem den folgenden Unterschritt umfasst:
E3.3) Schrägverstellung O/PP des Steuerorgans (12) um einen vorbestimmten Abstand.
